# EUROPEAN PATENT APPLICATION

(11) **EP 4 838 989 A1**
(43) Date of publication of application: **11.11.2026**
(21) Application number: 24915152.3
(22) Date of filing: 25.12.2024
(51) Int. Cl.: H04W 72/232

(54) **TRANSMISSION PROCESSING METHOD AND APPARATUS, COMMUNICATION DEVICE, AND READABLE STORAGE MEDIUM**

(30) Priority: 05.01.2024 CN 202410024071
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: KE, Ting, Beijing 100032 (CN); YANG, Tuo, Beijing 100032 (CN); WANG, Fei, Beijing 100032 (CN); SHEN, Xiaodong, Beijing 100032 (CN); LI, Yan, Beijing 100032 (CN); HU, Nan, Beijing 100032 (CN)
(74) Representative: Herrero & Asociados, S.L.
(86) International application number: PCT/CN2024/142123
(87) International publication number: WO 2025/145937

(57) **Abstract**

A transmission processing method includes: performing a first behavior according to first information. The first behavior includes at least one of: when transmission of a first downlink channel is to overlap in time with transmission of a second uplink channel, performing a first operation; when transmission of the first downlink channel is to overlap in time with transmission of the second uplink channel, performing a second operation; not expecting that transmission of the first downlink channel overlaps in time with transmission of the second uplink channel. The first information includes at least one of: configuration of first priority of the first downlink channel and the second uplink channel, grant or scheduling of the first downlink channel and the second uplink channel, a timing relationship between the first downlink channel based on grant or scheduling and the second uplink channel based on grant or scheduling.

## Description

### CROSS-REFERENCE TO RELATED APPLICATIONS

The present application claims the priority of the Chinese patent application No. 202410024071.9, filed on January 5, 2024, contents of which are incorporated herein by its entireties.

### TECHNICAL FIELD

Embodiments of the present disclosure relate to the technical field of wireless, and more specifically, to a transmission processing method, an apparatus, a communication device, and a readable storage medium.

### BACKGROUND

In the related art, in order to meet service requirements of ultra-low latency and ultra-large uplink, subband non-overlapping full duplex (SBFD) is introduced. In an SBFD network, a base station is capable of performing transmission and reception simultaneously, however, a terminal may not be able to perform transmission and reception simultaneously. When an uplink transmission resource overlaps in time with a downlink transmission resource, the terminal may need to select one transmission direction.

Similarly, in the simultaneous same-frequency full-duplex technology for the 6th generation mobile communication (6G), when the terminal does not perform transmission and reception simultaneously and the uplink transmission resource overlaps in time with the downlink transmission resource, the terminal may need to select one transmission direction.

In the above situation, how to address an uplink and downlink transmission conflict at the terminal may be a problem that needs to be solved.

### SUMMARY

The present disclosure provides a transmission processing method, an apparatus, a communication device, and a readable storage medium, so as to solve the problem that the uplink and downlink transmission conflict may be caused at the terminal.

In order to solve the above problem, the present disclosure provides following technical solutions.

In an aspect, the present disclosure provides a transmission processing method, including the following.

A terminal performs a first behavior according to first information. The first behavior includes at least one of: when transmission of a first downlink channel is to overlap in time with transmission of a second uplink channel, performing a first operation; when transmission of the first downlink channel is to overlap in time with transmission of the second uplink channel, performing a second operation; not expecting that transmission of the first downlink channel overlaps in time with transmission of the second uplink channel.

The first information includes at least one of: a configuration of first priorities of the first downlink channel and the second uplink channel, grant or scheduling of the first downlink channel and the second uplink channel, a timing relationship between the first downlink channel based on grant or scheduling and the second uplink channel based on grant or scheduling.

The first operation includes any one of:
Determining that transmission of the first downlink channel overrides transmission of the second uplink channel;
Receiving the first downlink channel, and/or, canceling transmitting or not transmitting the second uplink channel.

The second operation includes any one of:
Determining that transmission of the second uplink channel overrides transmission of the first downlink channel;
Transmitting the second uplink channel, and/or, canceling receiving or not receiving the first downlink channel.

In some embodiments, the terminal performing the first behavior according to the first information includes any one of following.

When transmission of the first downlink channel is to overlap in time with transmission of the second uplink channel, and when the first downlink channel is scheduled by a first DCI format and the second uplink channel is scheduled by a second DCI format, the terminal performs the first operation or the second operation according to an earlier or later relationship between a reception timing of a PDCCH providing the first DCI format and a reception timing of a PDCCH providing the second DCI format.

When transmission of the first downlink channel is to overlap in time with transmission of the second uplink channel, and when the first downlink channel is scheduled by a third DCI format and the second uplink channel is a configured grant, the terminal performs the first operation.

When transmission of the first downlink channel is to overlap in time with transmission of the second uplink channel, and when the first downlink channel is a configured grant and the second uplink channel is scheduled by a fourth DCI format, the terminal performs the second operation.

In some embodiments, the terminal performing the first operation or the second operation according to the earlier or later relationship between the reception timing of the PDCCH providing the first DCI format and the reception timing of the PDCCH providing the second DCI format, includes at least one of the following.

The terminal performs the first operation when the reception timing of the PDCCH providing the first DCI format is later than the reception timing of the PDCCH providing the second DCI format.

The terminal performs the first operation when an ending symbol of the PDCCH providing the first DCI format is later than an ending symbol of the PDCCH providing the second DCI format, and the ending symbol of the PDCCH providing the first DCI format is before a beginning symbol of the second uplink channel, and a time interval between the ending symbol of the PDCCH providing the first DCI format and the beginning symbol of the second uplink channel is greater than or equal to a first duration.

The terminal performs the second operation when the reception timing of the PDCCH providing the second DCI format is later than the reception timing of the PDCCH providing the first DCI format.

The terminal performs the second operation when an ending symbol of the PDCCH providing the second DCI format is later than an ending symbol of the PDCCH providing the first DCI format, and the ending symbol of the PDCCH providing the second DCI format is before a beginning symbol of the first downlink channel, and a time interval between the ending symbol of the PDCCH providing the second DCI format and the beginning symbol of the first downlink channel is greater than or equal to a second duration.

In some embodiments, the terminal performs the first operation, when an ending symbol of the PDCCH providing the first DCI format is later than an ending symbol of the PDCCH providing the second DCI format, and the ending symbol of the PDCCH providing the first DCI format is before a beginning symbol of the second uplink channel, and a time interval between the ending symbol of the PDCCH providing the first DCI format and the beginning symbol of the second uplink channel is greater than or equal to M1 symbols. The M1 may be a non-negative number.

In some embodiments, the terminal performs the second operation, when the ending symbol of the PDCCH providing the second DCI format is later than the ending symbol of the PDCCH providing the first DCI format, and the ending symbol of the PDCCH providing the second DCI format is before a beginning symbol of the first downlink channel, and a time interval between the ending symbol of the PDCCH providing the second DCI format and the beginning symbol of the first downlink channel is greater than or equal to M2 symbols. The M2 may be a non-negative number

In some embodiments, the terminal performs the first behavior according to first information, includes any one of the following.

The terminal does not expect that transmission of the first downlink channel overlaps in time with transmission of the second uplink channel when both transmission of the first downlink channel and transmission of the second uplink channel are configured grants.

The terminal performs the first operation or the second operation when transmission of the first downlink channel is to overlap in time with transmission of the second uplink channel, and when both transmission of the first downlink channel and transmission of the second uplink channel are configured grants.

The terminal does not expect that transmission of the first downlink channel overlaps in time with transmission of the second uplink channel when transmission of the first downlink channel is scheduled by a fifth DCI format and transmission of the second uplink channel is scheduled by a sixth DCI format.

In some embodiments, the terminal is not configured with a first priority.

Alternatively, the terminal is configured with a first priority, and the first priority of the first downlink channel is the same as the first priority of the second uplink channel.

In some embodiments, the terminal performing the first behavior according to first information, includes the following.

When the terminal is configured with a first priority, and the first priority of the first downlink channel is different from the first priority of the second uplink channel, the terminal performs any one of the following.

At least when the first priority of the first downlink channel is higher than the first priority of the second uplink channel, the terminal performs the first operation.

At least when the first priority of the second uplink channel is higher than the first priority of the first downlink channel, the terminal performs the second operation.

In some embodiments, the first priority is configured to indicate a priority between an uplink channel and a downlink channel.

In some embodiments, the first priority is indicated by a first priority field in a DCI format and/or radio resource control (RRC) signaling.

In some embodiments, a DCI format and/or radio resource control (RRC) signaling received by the terminal includes a first priority field, the first priority field is configured to indicate the first priority between the uplink channel and the downlink channel.

In some embodiments, a DCI format and/or radio resource control (RRC) signaling received by the terminal further includes a second priority field, and the second priority field is configured to indicate a priority of the uplink channel.

In some embodiments, the first priority is configured to indicate priorities among at least two channels.

The at least two channels includes at least one of the following:
At least one uplink channel and at least one downlink channel;
At least two uplink channels; and
At least two downlink channels.

In some embodiments, the first priority is indicated by a third priority field in a DCI format and/or RRC signaling received by the terminal.

In some embodiments, the transmission processing method further includes at least one of the following.

The terminal determines, according to a priority indicator field in a seventh DCI format, a first priority of a PDSCH reception scheduled by the seventh DCI format and a first priority of a HARQ-ACK feedback corresponding to the PDSCH reception.

The terminal determines, according to a priority indicator field in a configuration information element for semi-persistent scheduling (SPS), a first priority of an SPS PDSCH reception; and a first priority of a HARQ-ACK feedback corresponding to the SPS PDSCH reception, and/or a first priority of a HARQ-ACK feedback corresponding to an SPS release.

In some embodiments, when determining, according to the priority indicator field in the seventh DCI format, the first priority of the PDSCH reception scheduled by the seventh DCI format and the first priority of the HARQ-ACK feedback corresponding to the PDSCH reception, the first priority of the PDSCH reception is equal to the first priority of the HARQ-ACK feedback corresponding to the PDSCH reception.

Furthermore, or alternatively, when determining, according to the priority indicator field in the configuration information element for semi-persistent scheduling (SPS), the first priority of the SPS PDSCH reception, and the first priority of the HARQ-ACK feedback corresponding to the SPS PDSCH reception, and/or the first priority of the HARQ-ACK feedback corresponding to the SPS release, at least one of the following is met: the first priority of the SPS PDSCH reception is equal to the first priority of the HARQ-ACK feedback corresponding to the SPS PDSCH reception; the first priority of the SPS PDSCH reception is less than or equal to the first priority of the HARQ-ACK feedback corresponding to the SPS release.

In some embodiments, the first priority of the HARQ-ACK feedback for the SPS PDSCH release may be determined according to protocol agreement or may be determined based on higher layer configuration.

In some embodiments, the first priority of the HARQ-ACK feedback for the SPS PDSCH release may be determined according to the priority indication in the *harq-CodebookID* field and the protocol agreement or higher layer configuration. In some embodiments, the first priority maybe equal to max{harq-CodebookID, m}, and the priority m may be determined by the protocol agreement or higher layer configuration.

In some embodiments, according to the priority indication in the *harq-CodebookID* field, table lookup may be performed to determine at least one of: the first priority of the SPS PDSCH reception, the first priority of the HARQ-ACK feedback corresponding to the SPS PDSCH reception, and the first priority of the HARQ-ACK feedback for the SPS PDSCH release.

In some embodiments, the transmission processing method further includes the following.

The terminal determines a transmission direction on a time unit according to received configuration or indication information.

The terminal determines, according to the transmission direction on the time unit, transmission situations of the first downlink channel and the second uplink channel and/or an overlapping situation of the first downlink channel and the second uplink channel in the time domain.

In some embodiments, the terminal, according to the first information, performs the first operation or performs the second operation or does not expect transmission of the first downlink channel overlapping in time with transmission of the second uplink channel, when both the first downlink channel and the second uplink channel can be transmitted, and when transmission of the first downlink channel is to overlap in time with transmission of the second uplink channel.

In some embodiments, when performing the first operation, the method further includes the following.

The terminal transmits, according to a next transmission occasion or a base station schedule, the canceled data on the second uplink channel.

Furthermore, or alternatively, when performing the second operation, the method further includes the following.

The terminal receives, according to a base station schedule or a pre-configured transmission occasion, the canceled data on the first downlink channel.

In a second aspect, a transmission processing method is provided, performed by a base station, including the following.

The base station performs a second behavior according to first information. The second behavior includes at least one of: when transmission of a first downlink channel of a terminal is to overlap in time with transmission of a second uplink channel, determining that the terminal performs a first operation or a second operation; determining to avoid scheduling or configuring transmission of the first downlink channel to overlap in time with transmission of the second uplink channel of the terminal.

The first information includes at least one of: a configuration of first priority of the first downlink channel and the second uplink channel, grant or scheduling scheme of the first downlink channel and the second uplink channel, a timing relationship between the first downlink channel based on grant or scheduling and the second uplink channel based on grant or scheduling.

The first operation includes any one of:
Determining that transmission of the first downlink channel overrides transmission of the second uplink channel;
Receiving the first downlink channel, and/or, canceling transmitting or not transmitting the second uplink channel.

The second operation includes any one of:
Determining that transmission of the second uplink channel overrides transmission of the first downlink channel; and
Transmitting the second uplink channel, and/or, canceling receiving or not receiving the first downlink channel.

In some embodiments, determining that the terminal performs the first operation or the second operation includes at least one of the following.

When the first downlink channel is scheduled by a first DCI format and the second uplink channel is scheduled by a second DCI format, the base station determines, according to an earlier or later relationship between a reception timing of the PDCCH providing the first DCI format and a reception timing of the PDCCH providing the second DCI format, that the terminal performs the first operation or the second operation.

When the first downlink channel is scheduled by a third DCI format and the second uplink channel is a configured grant, the base station determines that the terminal performs the first operation.

When the first downlink channel is a configured grant and the second uplink channel is scheduled by a fourth DCI format, the base station determines that the terminal performs the second operation.

In some embodiments, the base station determining, according to the earlier or later relationship between the reception timing of the PDCCH providing the first DCI format and the reception timing of the PDCCH providing the second DCI format, that the terminal performs the first operation or the second operation, includes at least one of the following.

When the reception timing of the PDCCH providing the first DCI format is later than the reception timing of the PDCCH providing the second DCI format, the base station determines that the terminal performs the first operation.

The base station determines that the terminal performs the first operation, when an ending symbol of the PDCCH providing the first DCI format is later than an ending symbol of the PDCCH providing the second DCI format, and the ending symbol of the PDCCH providing the first DCI format is before a starting symbol of the second uplink channel, and a time interval between the ending symbol of the PDCCH providing the first DCI format and the starting symbol of the second uplink channel is greater than or equal to a first duration.

The base station determines that the terminal executes the second operation, when the reception timing of the PDCCH providing the second DCI format is later than the reception timing of the PDCCH providing the first DCI format.

The base station determines that the terminal performs the second operation, when the ending symbol of the PDCCH providing the second DCI format is later than the ending symbol of the PDCCH providing the first DCI format, and the ending symbol of the PDCCH providing the second DCI format is before a starting symbol of the first downlink channel, and a time interval between the ending symbol of the PDCCH providing the second DCI format and the starting symbol of the first downlink channel is greater than or equal to a second duration.

In some embodiments, the base station performing the second behavior according to the first information includes any one of the following:
The base station avoids, through scheduling or configuration, transmission of the first downlink channel from overlapping in time with transmission of the second uplink channel, when both transmission of the first downlink channel and transmission of the second uplink channel are configured grants.

The base station determines that the terminal performs the first operation or the second operation, when transmission of the first downlink channel is to overlap in time with transmission of the second uplink channel, and when both transmission of the first downlink channel and transmission of the second uplink channel are configured grants.

The base station avoids, through scheduling or configuration, transmission of the first downlink channel from overlapping in time with transmission of the second uplink channel, when transmission of the first downlink channel is scheduled by a fifth DCI format and transmission of the second uplink channel is scheduled by a sixth DCI format.

In some embodiments, the terminal is not configured with a first priority.

Alternatively, the terminal is configured with the first priority, and the first priority of the first downlink channel is the same as the first priority of the second uplink channel.

In some embodiments, determining that the terminal performs the first operation or the second operation includes the following.

When the terminal is configured with the first priority, and the first priority of the first downlink channel is different from the first priority of the second uplink channel, the base station performs any one of the following.

At least when the first priority of the first downlink channel is higher than the first priority of the second uplink channel, the base station determines that the terminal performs the first operation.

At least when the first priority of the second uplink channel is higher than the first priority of the first downlink channel, the base station determines that the terminal performs the second operation.

In some embodiments, the method further includes the following.

The base station determines a transmission behavior of the terminal when transmission of the first downlink channel overlaps in time with transmission of the second uplink channel.

The base station determines the first information according to the transmission behavior.

The base station configures or schedules the terminal according to the first information.

In some embodiments, the base station determining the transmission behavior of the terminal when transmission of the first downlink channel overlaps in time with transmission of the second uplink channel, includes the following.

The base station determines, according to importance of services carried on the first downlink channel and the second uplink channel, the transmission behavior of the terminal when transmission of the first downlink channel overlaps in time with transmission of the second uplink channel.

In some embodiments, the first priority is configured to determine a priority between an uplink channel and a downlink channel.

Alternatively, the first priority is configured to indicate priorities among at least two channels. The at least two channels include at least one of: at least one uplink channel and at least one downlink channel; at least two uplink channels; at least two downlink channels.

In a third aspect, a transmission processing apparatus is provided, applied to a terminal, including the following.

An execution module is configured to perform a first behavior according to first information. The first behavior includes at least one of: when transmission of a first downlink channel is to overlap in time with transmission of a second uplink channel, performing a first operation; when transmission of the first downlink channel is to overlap in time with transmission of the second uplink channel, performing a second operation; not expecting that transmission of the first downlink channel overlaps in time with transmission of the second uplink channel.

The first information includes at least one of: a configuration of first priority of the first downlink channel and the second uplink channel, grant or scheduling of the first downlink channel and the second uplink channel, a timing relationship between the first downlink channel based on grant or scheduling and the second uplink channel based on grant or scheduling.

The first operation includes any one of:
Determining that transmission of the first downlink channel overrides transmission of the second uplink channel.

Receiving the first downlink channel, and/or, canceling transmitting or not transmitting the second uplink channel.

The second operation includes any one of:
Determining that transmission of the second uplink channel overrides transmission of the first downlink channel;
Transmitting the second uplink channel, and/or, canceling receiving or not receiving the first downlink channel.

In a fourth aspect, a transmission processing apparatus is provided, applied to a base station, including the following.

A determination module is configured to perform a second behavior according to first information. The second behavior includes at least one of: when transmission of a first downlink channel of a terminal is to overlap in time with transmission of a second uplink channel, determining that the terminal performs a first operation or a second operation; determining to avoid scheduling or configuring transmission of the first downlink channel to overlap in time with transmission of the second uplink channel of the terminal.

The first information includes at least one of: a configuration of first priority of the first downlink channel and the second uplink channel, grant or scheduling of the first downlink channel and the second uplink channel, a timing relationship between the first downlink channel based on grant or scheduling and the second uplink channel based on grant or scheduling.

The first operation includes any one of:
Determining that transmission of the first downlink channel overrides transmission of the second uplink channel;
Receiving the first downlink channel, and/or, canceling transmitting or not transmitting the second uplink channel.

The second operation includes any one of:
Determining that transmission of the second uplink channel overrides transmission of the first downlink channel;
Transmitting the second uplink channel, and/or, canceling receiving or not receiving the first downlink channel.

In a fifth aspect, a communication device is provided, including a processor, a memory, and programs or instructions stored on the memory and executable on the processor. The programs or instructions, when executed by the processor, implement the method according to the first aspect, or the method according to the second aspect.

In a sixth aspect, a readable storage medium is provided. The readable storage medium stores programs or instructions. The program or instructions, when executed by a processor, implement the method according to the first aspect or the method according to the second aspect.

According to the above technical solution, it may be clarified how to address the uplink and downlink transmission conflict at the terminal, problems such as the inter-direction transmission conflict in the full-duplex network may be solved, and transmission reliability may be improved.

### BRIEF DESCRIPTION OF THE DRAWINGS

FIG. 1 is a flow chart of a transmission processing method according to an embodiment of the present disclosure.
FIG. 2A, FIG. 2B, FIG. 2C, and FIG. 2D are schematic diagrams of transmission processing performed based on a timing relationship according to embodiments of the present disclosure.
FIG. 3A and FIG. 3B are schematic diagrams of transmission processing performed based on a priority according to embodiments of the present disclosure.
FIG. 4 is a flow chart of another transmission processing method according to an embodiment of the present disclosure.
FIG. 5A and FIG. 5B are schematic diagrams of determining a transmission behavior of a terminal based on service importance according to an embodiment of the present disclosure.
FIG. 6 is a structural diagram of a transmission processing apparatus according to an embodiment of the present disclosure.
FIG. 7 is a structural diagram of another transmission processing apparatus according to an embodiment of the present disclosure.
FIG. 8 is a structural diagram of a communication device according to an embodiment of the present disclosure.

### DETAILED DESCRIPTIONS

Technical solutions in the embodiments of the present disclosure will be clearly and completely described below by referring to the accompanying drawings in the embodiments of the present disclosure. The described embodiments are only a part of, not all of, the embodiments of the present disclosure. All other embodiments, which are obtained by any ordinary skilled artisan in the art based on the embodiments of the present disclosure without making creative work, shall fall within the scope of the present disclosure.

Terms "first", "second", and so on, in the specification and claims of the present disclosure are used to distinguish similar objects, and are not used to describe a specific order or sequence. It should be understood that data defined by the terms may be interchanged under appropriate circumstances, such that the embodiments of the present disclosure may be implemented in an order other than those illustrated or described herein. Objects distinguished by "first", "second", and so on, are generally of one class, and the number of the objects is not limited. For example, a first object may be one first object or a plurality of first objects. In addition, "and/or" in the specification and claims indicates at least one of the defined objects, and the character "/" generally indicates that an object in front of the character "or" an object after the character.

Terms of a first priority, a second priority, and so on, in the present disclosure are general referring terms, and there is no sequential relationship or comparison in priority magnitudes therebetween.

In some embodiments, an application scenario of the present disclosure may include, but not limited to: subband non-overlapping full duplex (SBFD), subband partially overlapping full duplex, subband fully overlapping full duplex (such as simultaneous same-frequency full duplex for 6G), and so on.

The transmission processing method, the apparatus, the communication device, and the readable storage medium according to the embodiments of the present disclosure will be described in detail below by referring to the accompanying drawings and specific embodiments.

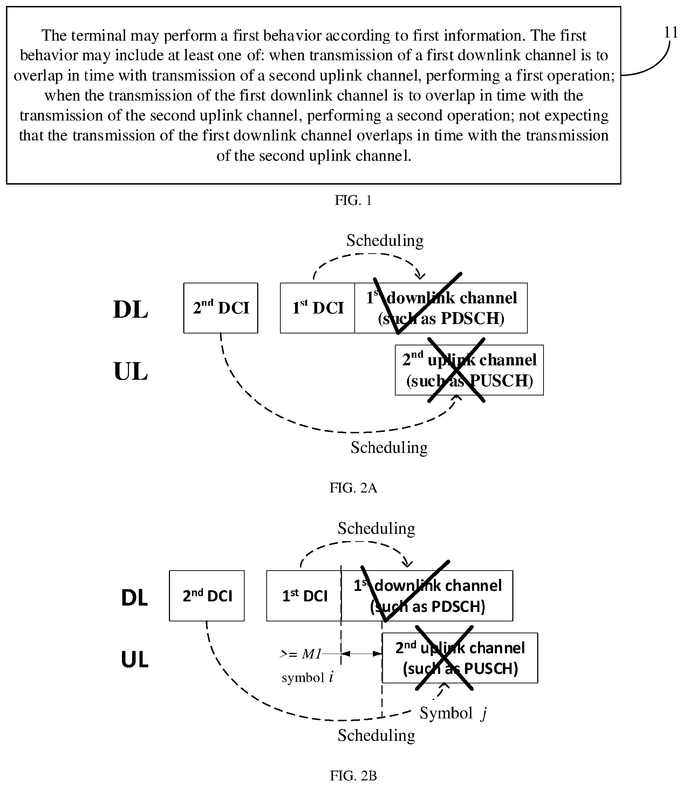

As shown in FIG. 1, FIG. 1 is a flow chart of a transmission processing method according to an embodiment of the present disclosure. The method may be applied to a terminal. As shown in FIG. 1, the method may include the following blocks.

In a block 11, the terminal may perform a first behavior according to first information. The first behavior may include at least one of: when transmission of a first downlink channel is to overlap in time with transmission of a second uplink channel, performing a first operation; when the transmission of the first downlink channel is to overlap in time with the transmission of the second uplink channel, performing a second operation; not expecting that the transmission of the first downlink channel overlaps in time with the transmission of the second uplink channel.

In the embodiment of the present disclosure, the first information may include at least one of: a configuration of a first priority of the first downlink channel and a first priority of the second uplink channel, grant or scheduling of the first downlink channel and the second uplink channel, and a timing relationship between the first downlink channel based on grant or scheduling and the second uplink channel based on grant or scheduling.

The first operation may include any one of:
Determining that transmission of the first downlink channel overrides transmission of the second uplink channel; and
Receiving the first downlink channel, and/or, canceling transmitting or not transmitting the second uplink channel.

The second operation may include any one of:
Determining that the transmission of the second uplink channel overrides the transmission of the first downlink channel; and
Transmitting the second uplink channel, and/or, canceling receiving or not receiving the first downlink channel.

The transmission of the first downlink channel overriding the transmission of the second uplink channel may be described as: the first downlink channel overriding the second uplink channel; or may be described as: receiving the first downlink channel, and/or, canceling transmitting/not transmitting the second uplink channel. Canceling transmitting the second uplink channel may be referred to as: the second uplink channel shall not be transmitted.

The transmission of the second uplink channel overriding the transmission of the first downlink channel may be described as: the second uplink channel overriding the first downlink channel; or may be described as: canceling receiving/not receiving the first downlink channel, and/or, transmitting the second uplink channel. Canceling receiving the first downlink channel may be referred to as: the first downlink channel shall not be received.

According to the present disclosure, it may be clarified how to address an uplink and downlink transmission conflict at the terminal. For example, an inter-direction transmission conflict in a full-duplex network may be solved, and transmission reliability may be improved.

In some embodiments, the first downlink channel may include, but not limited to: a physical broadcast channel (PBCH), a physical downlink control channel (PDCCH), a physical downlink shared channel (PDSCH), and so on.

In some embodiments, the second uplink channel may include, but not limited to: a physical uplink control channel (PUCCH), a physical uplink shared channel (PUSCH), a physical random access channel (PRACH), and so on.

In some embodiments, the first priority may also be referred to as a cross-direction priority and may be at least used to determine a priority between different transmission directions. The cross-direction may be referred to as, but not limited to: cross-direction, inter-direction, cross-downlink (DL)-uplink (UL), inter-DL-UL, and so on. The cross-direction priority may also be referred to as, but not limited to: cross-direction priority, inter-direction priority, cross-DL-UL priority, inter-DL-UL priority, and so on.

In some embodiments, the first downlink channel or the second uplink channel may be scheduled by a downlink control information (DCI) format, which may also be referred to as, but not limited to: dynamic grant (DG), dynamically allocated downlink reception, dynamically allocated uplink transmission, and so on.

The first downlink channel or the second uplink channel being configured grant (CG) may also be referred to as, but not limited to: semi-static configuration, configured downlink assignment, configured uplink grant, semi-persistent scheduling (SPS).

In some embodiments, under specific conditions, the terminal may not expect that the transmission of the first downlink channel overlaps in time with the transmission of the second uplink channel.

Generally, the UE not expecting a scenario XX may be equivalently expressed in any of the following forms:
The UE may expect that a following situation does not occur, and the situation may include: the scenario XX.

A UE behavior under the scenario XX is undefined.

No constraint is applied on the UE behavior under the scenario XX.

When the scenario XX is met, the UE may ignore or not perform a corresponding configuration or indication of the network.

It may be recommended that the base station does not configure/indicate the scenario XX.

Therefore, in an embodiment, the terminal not expecting that the transmission of the first downlink channel overlaps in time with the transmission of the second uplink channel, may also be described in any of the following forms:
1) The terminal may expect that the transmission of the first downlink channel does not overlap in time with the transmission of the second uplink channel.
2) A terminal behavior in a scenario where the transmission of the first downlink channel overlaps in time with the transmission of the second uplink channel may be undefined.
3) No constraint is applied on the terminal behavior in the scenario where the transmission of the first downlink channel overlaps in time with the transmission of the second uplink channel.
4) In the scenario where the transmission of the first downlink channel overlaps in time with the transmission of the second uplink channel, the terminal may ignore or may not perform the corresponding configuration or indication of the network.
5) It may be recommended that the base station does not configure/indicate overlapping of the transmission of the first downlink channel and the transmission of the second uplink channel in the time domain.

The terminal behavior being undefined may mean that, when the terminal receives a network configuration/indication that the terminal does not expect, the terminal behavior may be undefined. At this moment, the terminal may perform any behavior. For example, in the present embodiment, when the terminal receives the network configuration/indication that the terminal does not expect, the terminal may receive the first downlink channel, or transmit the second uplink channel, or neither receive the first downlink channel nor transmit the second uplink channel.

In some embodiments, the first behavior may be performed according to the grant or scheduling of the first downlink channel and the second uplink channel, or according to the timing relationship between the first downlink channel based on grant or scheduling and the second uplink channel based on grant or scheduling. The above-mentioned terminal performing the first behavior according to the first information, may include any one of the following.

When the transmission of the first downlink channel is to overlap in time with the transmission of the second uplink channel, and when the first downlink channel is scheduled by a first DCI format and the second uplink channel is scheduled by a second DCI format, the terminal may perform the first operation or the second operation based on an earlier or later relationship between a reception timing of the PDCCH providing the first DCI format and a reception timing of the PDCCH providing the second DCI format.

When the transmission of the first downlink channel is to overlap in time with the transmission of the second uplink channel, and when the first downlink channel is scheduled by a third DCI format and the second uplink channel is configured grant, the terminal may perform the first operation.

When the transmission of the first downlink channel is to overlap in time with the transmission of the second uplink channel, and when the first downlink channel is configured grant and the second uplink channel is scheduled by a fourth DCI format, the terminal may perform the second operation.

It should be noted that, that the first downlink channel being scheduled by the first DCI format, may also be referred to as: the first downlink channel being dynamically granted (DG), the first downlink channel being dynamically allocated downlink reception, and so on.

The second uplink channel being scheduled by the second DCI format, may also be referred to as: the second uplink channel being dynamically granted (DG), the second uplink channel being dynamically allocated uplink transmission, and so on.

The second uplink channel being configured grant (CG), may also be referred to as: the second uplink channel being configured uplink grant, and so on.

The first downlink channel being configured grant (CG), may also be referred to as: the first downlink channel being configured downlink assignment, the first downlink channel being semi-persistent scheduling (SPS), and so on.

The DCI format may be referred to as DCI in brief.

The reception timing of the PDCCH of the first/second DCI format may also be referred to as: the reception timing of the DCI corresponding to the first/second DCI format.

The expression of "the earlier or later relationship between the reception timing of the PDCCH providing the first DCI format and the reception timing of the PDCCH providing the second DCI format" may also be referred to as: a timing relationship between the reception timing of the PDCCH providing the first DCI format and the reception timing of the PDCCH providing the second DCI format.

Performing the first operation or the second operation based on the earlier or later relationship between the reception timing of the PDCCH providing the first DCI format and the reception timing of the PDCCH providing the second DCI format, may also be expressed as: performing the first operation or the second operation based on the earlier or later relationship between the reception timing of the first DCI and the reception timing of the second DCI; or expressed as: performing the first operation or the second operation based on the timing relationship between the reception timing of the PDCCH providing the first DCI format and the reception timing of the PDCCH providing the second DCI format.

In some embodiments, performing the first operation or the second operation based on the earlier or later relationship between the reception timing of the PDCCH providing the first DCI format and the reception timing of the PDCCH providing the second DCI format, as described in the above, may include at least one of the following.
(1) When the reception timing of the PDCCH providing the first DCI format is later than the reception timing of the PDCCH providing the second DCI format, the terminal may perform the first operation.
   For example, as shown in FIG. 2A, the first DCI schedules the first downlink channel (such as the PDSCH), the second DCI schedules the second uplink channel (such as the PUSCH), and the reception timing of the first DCI is later than the reception timing of the second DCI. In this case, the UE may receive the first downlink channel (such as the PDSCH) and may cancel transmitting/may not transmit the second uplink channel (such as the PUSCH).
(2) When an ending symbol of the PDCCH providing the first DCI format is later than an ending symbol of the PDCCH providing the second DCI format, and the ending symbol of the PDCCH providing the first DCI format is before a beginning symbol of the second uplink channel, and a time interval between the ending symbol of the PDCCH providing the first DCI format and the beginning symbol of the second uplink channel is greater than or equal to a first duration, the terminal may perform the first operation. The first duration may be defined by the protocol or configured in advance, for example, the first duration may be equal to M1 symbols, and the M1 may be a non-negative number.

In some embodiments, when the ending symbol of the PDCCH providing the first DCI format is later than the ending symbol of the PDCCH providing the second DCI format, and the ending symbol of the PDCCH providing the first DCI format is before the beginning symbol of the second uplink channel, and the time interval between the ending symbol of the PDCCH providing the first DCI format and the beginning symbol of the second uplink channel is greater than or equal to the M1 symbols, the terminal may determine to perform the first operation, and the M1 may be the non-negative number.

For example, as shown in FIG. 2B, when the first DCI schedules the first downlink channel (such as the PDSCH), and the second DCI schedules the second uplink channel (such as the PUSCH), and the ending symbol of the first DCI is later than the ending symbol of the second DCI, and the ending symbol i of the first DCI is before the beginning symbol j of the second uplink channel (such as the PUSCH), and the time interval between the ending symbol i of the first DCI format and the beginning symbol j of the second uplink channel (such as the PUSCH) is greater than or equal to the M1 symbols, the UE may receive the first downlink channel (such as the PDSCH), and may cancel transmitting/may not transmit the second uplink channel (such as the PUSCH).

(3) When the reception timing of the PDCCH providing the second DCI format is later than the reception timing of the PDCCH providing the first DCI format, the terminal may perform the second operation.

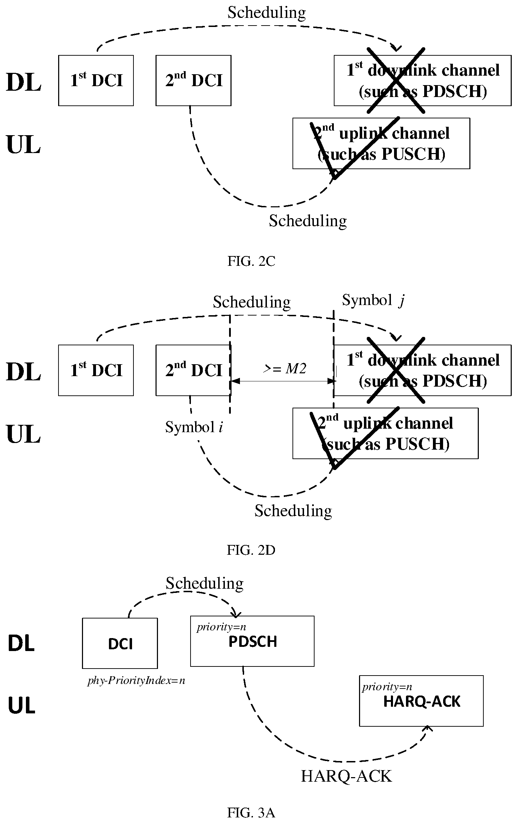

For example, as shown in FIG. 2C, when the first DCI schedules the first downlink channel (such as the PDSCH), and the second DCI schedules the second uplink channel (such as the PUSCH), and the reception timing of the second DCI is later than the reception timing of the first DCI, the UE may transmit the second uplink channel (such as the PUSCH) and may cancel receiving/may not receive the first downlink channel (such as the PDSCH).

(4) When the ending symbol of the PDCCH providing the second DCI format is later than the ending symbol of the PDCCH providing the first DCI format, and the ending symbol of the PDCCH providing the second DCI format is before a beginning symbol of the first downlink channel, and a time interval between the ending symbol of the PDCCH providing the second DCI format and the beginning symbol of the first downlink channel is greater than or equal to a second duration, the terminal may perform the second operation. The second duration may be defined by a protocol or configured in advance. For example, the second duration may be equal to M2 symbols, and the M2 may be a non-negative number.

In some embodiments, when the ending symbol of the PDCCH providing the second DCI format is later than the ending symbol of the PDCCH providing the first DCI format, and the ending symbol of the PDCCH providing the second DCI format is before the beginning symbol of the first downlink channel, and the time interval between the ending symbol of the PDCCH providing the second DCI format and the beginning symbol of the first downlink channel is greater than or equal to the M2 symbols, the terminal may determine to perform the second operation. The M2 may be the non-negative number.

For example, as shown in FIG. 2D, when the first DCI schedules the first downlink channel (such as the PDSCH), and the second DCI schedules the second uplink channel (such as the PUSCH), and the ending symbol of the second DCI is later than the ending symbol of the first DCI, and the ending symbol i of the second DCI is before the beginning symbol j of the first downlink channel (such as the PDSCH), and the time interval between the ending symbol i of the second DCI and the beginning symbol j of the first downlink channel (such as the PDSCH) is greater than or equal to the M2 symbols, the UE may transmit the second uplink channel (such as the PUSCH) and may cancel receiving/may not receive the first downlink channel (such as the PDSCH).

It should be noted that, in some cases, the reception timing of the PDCCH of the DCI format may be referred to as the reception timing of the DCI.

The reception timing of the PDCCH may include, but not limited to: the ending symbol of the PDCCH, the beginning symbol of the PDCCH. In some embodiments, the reception timing of the PDCCH may be the ending symbol of the PDCCH.

The reception timing of the DCI may include, but not limited to: the ending symbol of the DCI, the beginning symbol of the DCI. In some embodiments, the reception timing of the DCI may be the ending symbol of the DCI.

In some embodiments, each of the M1 and the M2 may be a non-negative integer. The M1 and the M2 may be determined according to a UE processing capability.

In some embodiments, the transmission processing method in the embodiment of the present disclosure may further include the following.

The terminal may determine a transmission direction on a time unit according to received configuration or indication information.

The terminal may determine, according to the transmission direction on the time unit, a transmission situation of the first downlink channel and a transmission situation of the second uplink channel and/or an overlapping situation of the first downlink channel and the second uplink channel in the time domain.

In some embodiments, before the block 11, the transmission processing method in the embodiment of the present disclosure may further include the following.

The terminal may determine the transmission direction on the time unit according to received configuration or indication information. For example, the configuration or indication information may include, but not limited to: SBFD subband configuration, a TDD-UL-DL-ConfigDedicated parameter, a slot format indicator (SFI), and so on. The time unit may include, but not limited to: a symbol, a symbol set, a slot, and so on. In an embodiment, the time unit may be the symbol, and the terminal may determine the symbol transmission direction according to the received configuration or indication information

The terminal may determine, according to the transmission direction on the time unit, whether transmission can be performed on the first downlink channel and the second uplink channel. Subsequently, when transmission can be performed on the first downlink channel and the second uplink channel, and when the transmission of the first downlink channel is to overlap in time with the transmission of the second uplink channel, the terminal may perform, according to the first information, the first operation or the second operation or may not expect that the transmission of the first downlink channel overlaps in time with the transmission of the second uplink channel.

In an embodiment, the transmission processing procedure may include the following.

First, a symbol transmission direction may be determined according to an uplink and downlink transmission direction determination rule (for example, determination may be made based on the SBFD subband configuration, the TDD-UL-DL-ConfigDedicated parameter, the slot format indicator (SFI), and so on). It may be determined, according to the symbol transmission direction, whether transmission can be performed on the uplink channel and the downlink channel, and actual transmission resources may be determined.

Secondly, for an uplink channel and a downlink channel that can be used for transmission:
1> When the uplink channel overlaps in time with the downlink channel overlap:
2> When the terminal is not provided with cross-direction priority configuration, or when the terminal is provided with the cross-direction priority configuration and the cross-direction priority of the uplink channel is the same as the cross-direction priority of the downlink channel:
31> When dynamically allocated downlink reception overlaps in time with dynamically allocated uplink transmission, a conflict resolution rule may be determined according to the reception timings of the PDCCHs. For example, under certain timing constraints, transmission scheduled by the DCI at a later received PDCCH may override the transmission scheduled by the DCI at an earlier received PDCCH;
32> When dynamically allocated downlink reception overlaps in time with configured uplink grant, the downlink reception may override the uplink transmission;
33> When configured downlink assignment overlaps in time with dynamically allocated uplink transmission, the uplink transmission may override the downlink reception;
34> The terminal may not expect configured downlink assignment overlapping in time with configured uplink grant. Alternatively, when the configured downlink assignment overlaps in time with the configured uplink grant, the terminal may perform a default behavior, such as downlink overriding uplink, or vice versa.
2> When the terminal is provided with the cross-direction priority configuration, and the cross-direction priority of the uplink channel is different from the cross-direction priority of the downlink channel, the conflict resolution rule may be determined at least according to the cross-direction priority configuration of the uplink channel and the cross-direction priority configuration of the downlink channel. For example, under certain timing constraints, transmission with a higher priority may override transmission with a lower priority.

In the embodiment of the present disclosure, the first behavior may be performed according to the grant or scheduling of the first downlink channel and the second uplink channel. The terminal performing the first behavior according to the first information, may include any one of the following.

When both transmission of the first downlink channel and transmission of the second uplink channel are configured grants, the terminal may not expect that transmission of the first downlink channel overlaps in time with transmission of the second uplink channel.

When transmission of the first downlink channel is to overlap in time with transmission of the second uplink channel, and when both transmission of the first downlink channel and transmission of the second uplink channel are configured grants, the terminal may perform the first operation or the second operation.

When transmission of the first downlink channel is scheduled by a fifth DCI format and transmission of the second uplink channel is scheduled by a sixth DCI format, the terminal may not expect that transmission of the first downlink channel overlaps in time with transmission of the second uplink channel, for example, the terminal may not expect a conflict between DG scheduled downlink and DG scheduled uplink.

In some embodiments, the terminal not expecting transmission of the first configured-grant downlink channel overlapping in time with transmission of the second configured-grant uplink channel, may be understood as follows. When the terminal receives the above configuration, i.e., transmission of the first configured-grant downlink channel overlaps in time with transmission of the second configured-grant uplink channel, the terminal behavior may be undefined. In this case, the terminal may receive the first downlink channel, or transmit the second uplink channel, or neither receive the first downlink channel nor transmit the second uplink channel.

In some embodiments, the terminal performing the first operation or the second operation when transmission of the first configured-grant downlink channel overlaps in time with transmission of the second configured-grant uplink channel, may be understood as follows. When the terminal receives the above configuration, i.e., transmission of the first configured-grant downlink channel overlaps in time with transmission of the second configured-grant uplink channel, the terminal may perform a default behavior. The default behavior may be a certain behavior specified by the protocol or configured in advance, so as to ensure that the base station and the terminal have consistent understanding of a relevant behavior. The default behavior may include any one of the following behaviors: the first downlink channel overriding the second uplink channel, the second uplink channel overriding the first downlink channel.

In some embodiments, for the above embodiment, the terminal may not be configured with the first priority; or, the terminal may be configured with the first priority, and the first priority of the first downlink channel is the same as the first priority of the second uplink channel. That is, in the case that the terminal is not configured with the first priority, or in the case that the terminal is configured with the first priority and the first priority of the first downlink channel is the same as the first priority of the second uplink channel, the terminal may perform the first operation or the second operation or may not expect transmission of the first downlink channel overlapping in time with transmission of the second uplink channel, according to the grant or scheduling of the first downlink channel and the second uplink channel, or according to the timing relationship between the first downlink channel based on grant or scheduling and the second uplink channel based on grant or scheduling. Details on how to perform the first operation or the second operation or how to not expect overlapping, according to the grant or scheduling or according to the timing relationship, may be referred to the above description, which will not be repeated here.

It should be noted that, the terminal being not configured with the first priority may also be referred to as: the terminal being not provided with the first priority. The terminal being configured with the first priority may also be referred to as: the terminal being provided with the first priority.

The first priority of the first downlink channel being the same as the first priority of the second uplink channel may also be referred to as: a cross-direction priority index of the first downlink channel being the same as a cross-direction priority index of the second uplink channel.

In some embodiments, performing the first behavior according to the first information, as described in the above, may include the following.

When the terminal is configured with the first priority, and when the first priority of the first downlink channel is different from the first priority of the second uplink channel are different, the terminal may perform any one of the following.

The terminal may perform the first operation, such as determining that transmission of the first downlink channel overriding transmission of the second uplink channel, at least when the first priority of the first downlink channel is higher than the first priority of the second uplink channel.

The terminal may perform the second operation, such as determining that transmission of the second uplink channel overriding transmission of the first downlink channel, at least when the first priority of the second uplink channel is higher than the first priority of the first downlink channel.

It may be understood that the above refers to performing the first operation or the second operation according to the configuration of the first priority. The first downlink channel and the second uplink channel may be any of: being scheduled by the DCI format or being configured grant.

In some embodiments, the first priority of the first downlink channel may be indicated by a priority index. The first priority of the second uplink channel may be indicated by a priority index.

In an embodiment, a greater priority index may indicate a higher priority. For example, a priority with a priority index = 1 may be higher than a priority with a priority index = 0. Therefore, "the priority of the first downlink channel being higher than the priority of the second uplink channel" may also be referred to as "the priority index of the first downlink channel being greater than the priority index of the second uplink channel" or "the first downlink channel having a greater priority index, and the second uplink channel having a smaller priority index".

In another embodiment, a smaller priority index may indicate a higher priority. For example, a priority with a priority index = 0 may be higher than a priority with a priority index = 1. Therefore, "the priority of the first downlink channel being higher than the priority of the second uplink channel" may also be referred to as "the priority index of the first downlink channel being less than the priority index of the second uplink channel", or "the first downlink channel having a smaller priority index, and the second uplink channel having a greater priority index".

In the embodiment of the present disclosure, the first priority may be used to determine a priority between the uplink channel and the downlink channel. For example, inter-direction dedicated priority configuration may be applied, i.e., a new set of inter-direction dedicated priority configuration, referred to as a cross-direction-dedicate-priority-index (CD-DPI), may be applied in addition to the existing uplink channel priority index. The CD-DPI may be only used to determine a priority between different transmission directions (inter-direction transmission). The terminal may determine, according to a magnitude of the CD-DPI, whether to perform downlink transmission or uplink transmission.

In some embodiments, the DCI format and/or radio resource control (RRC) signaling received by the terminal may include a first priority field and a second priority field. The first priority field may be used to indicate the first priority (i.e., the cross-direction priority), and the second priority field may be used to indicate the priority of the uplink channel.

In may be understood that the first priority field may be a newly added priority field in the present disclosure. In an embodiment, the DCI format may include the first priority field, and the first priority field may be 1 bit. For example, 0 may indicate a low priority, 1 may indicate a high priority; or, 0 may indicate a high priority, 1 may indicate a low priority. In another embodiment, the RRC signaling may include the first priority field, and the first priority field may be an enumeration variable taking two values. For example, the enumeration variable may be p0 and p1, the p0 may indicate a low priority, the p1 may indicate a high priority; or, the p0 may indicate a high priority, the p1 may indicate a low priority.

The second priority field may be an existing priority field. Based on existing rules, the base station and the terminal may determine priorities of a plurality of uplink channels according to the second priority field. The second priority field may be, for example, the *Priority indicator* field in DCI Format 0_1, DCI Format 0_2, DCI Format 1_1, DCI Format 1_2; or may be the *phy-PriorityIndex* field in configured grant PUSCH transmission and SR configuration.

In some embodiments, the first priority may be used to determine priorities among at least two channels. The at least two channels may include at least one of:
At least one uplink channel and at least one downlink channel;
At least two uplink channels;
At least two downlink channels.

For example, inter-direction joint priority configuration may be applied. For example, the existing uplink channel priority index may be extended, such that uplink channels and downlink channels may use the same extended priority index, which may be referred to as a cross-direction-join-priority-index (CD-JPI). The CD-JPI may be used to determine a priority among various channels of a same transmission direction (intra-direction) and to determine a priority among various channels of different transmission directions (inter-direction). The terminal may determine the priority among various channels according to a magnitude of the CD-JPI.

It should be noted that, the present embodiment does not limit channel types of the at least two channels. For example, taking two channels as an example, the two channels may include, but not limited to: a PUSCH and a PDSCH, a PUCCH and a PDSCH, a PUSCH and a PUCCH, two PUCCHs, two PUSCHs, a PDSCH and a PDSCH, and so on. All examples may not be exhaustively listed here.

In some embodiments, the DCI format and/or RRC signaling received by the terminal may include a third priority field. The third priority field may be used to indicate a priority among at least two channels. The at least two channels may include at least one of: at least one uplink channel and at least one downlink channel; at least two uplink channels; at least two downlink channels.

In some embodiments, for the third priority field, *Priority indicator* fields in some existing DCI formats may be extended, for example, the *Priority indicator* field in DCI Format 0_1, DCI Format 0_2, DCI Format 1_1 or DCI Format 1_2 may be extended from 1 bit to 2 bits, enabling the extended *Priority indicator* field to additionally indicate the priority between uplink channels and downlink channels. Furthermore or alternatively, *phy-PriorityIndex* fields in some RRC signaling may be extended, for example, the *phy-PriorityIndex* field in ConfiguredGrantConfig and SchedulingRequestResourceConfig IE may be extended from 2 enumeration variables {p0, p1} to 3 or more enumeration variables, such as being extended to {p0, p1, p2, p3}, enabling the *phy-PriorityIndex* field to additionally indicate the priority between uplink channels and downlink channels. Furthermore or alternatively, a third priority field may be added in some existing RRC signaling, for example, the third priority field may be added to SPS-Config IE, enabling the SPS-Config IE to additionally indicate the priority between uplink channels and downlink channels.

For example, for priority comparison, when the priority of a first channel is greater than the priority of a second channel, it may be determined that the first channel overrides the second channel. The first channel may be a downlink (DL) channel, and the second channel may be an uplink (UL) channel; or, the first channel may be the UL channel, and the second channel may be the UL channel; or, the first channel may be the DL channel, and the second channel may be the DL channel.

In another example, the priority of the first PDSCH may be p0, the priority of the second PDSCH may be p2, the priority of the first PUSCH may be p1, the priority of the first PUCCH may be p3, and the priority of the first PUCCH (p3) > second PDSCH (p2) > first PUSCH (p1) > first PDSCH (p0). In this case, when at least two of the above channels conflict with each other, the channel with the higher priority may override the channel with the lower priority according to a priority order from a higher one to a lower one.

In some embodiments, the transmission processing method in the embodiment of the present disclosure may further include at least one of the following.

The terminal may determine, according to a priority indicator field in a seventh DCI format, a first priority of PDSCH reception scheduled by the seventh DCI format, and a first priority of a Hybrid Automatic Repeat Request Acknowledgement (HARQ-ACK) feedback corresponding to the PDSCH reception.

According to a priority indicator field in a semi-persistent scheduling (SPS) configuration information element, the terminal may determine a first priority of SPS PDSCH reception; and a first priority of a HARQ-ACK feedback corresponding to the SPS PDSCH reception, and/or a first priority of a HARQ-ACK feedback corresponding to SPS release.

In some embodiments, when determining, according to the priority indicator field in the seventh DCI format, the first priority of the PDSCH reception scheduled by the seventh DCI format and the first priority of the HARQ-ACK feedback corresponding to the PDSCH reception, the first priority of the PDSCH reception may be equal to the first priority of the HARQ-ACK feedback corresponding to the PDSCH reception.

In some embodiments, when determining, according to the priority indicator field in the SPS configuration information element, the first priority of the SPS PDSCH reception, and the first priority of the HARQ-ACK feedback corresponding to the SPS PDSCH reception, and/or the first priority of the HARQ-ACK feedback corresponding to the SPS release, at least one of the following may be met: the first priority of the SPS PDSCH reception being equal to the first priority of the HARQ-ACK feedback corresponding to the SPS PDSCH reception; the first priority of the SPS PDSCH reception being less than or equal to the first priority of the HARQ-ACK feedback corresponding to the SPS release.

In some embodiments, the existing priority field may be used in duplex. For example, for HARQ-ACK feedback, an existing priority field, such as the *Priority indicator* field in the downlink grant (DL grant) DCI, and/or the *harq-CodebookID* field in the RRC SPS-Config IE, may additionally indicate the priority of the PDSCH channel corresponding to the HARQ-ACK feedback in addition to indicating the priority of the PUCCH/PUSCH carrying the HARQ-ACK feedback.

In some embodiments, the *Priority indicator* field of the seventh DCI format may be used to simultaneously determine the first priority of the PDSCH reception scheduled by the seventh DCI format and the first priority of the HARQ-ACK feedback corresponding to the PDSCH reception. In this case, the first priority may be used to determine the priority among at least two channels. The first priority of the first downlink channel may be: the priority of the PDSCH reception indicated by the priority indicator field (such as the *Priority indicator* field) in the downlink DCI format. The first priority of the second uplink channel may be: the priority of the Hybrid Automatic Repeat Request Acknowledgement (HARQ-ACK) feedback corresponding to the PDSCH reception.

In some embodiments, the priority indicator field, the *harq-CodebookID* field, in a configuration information element for the SPS (RRC SPS-Config IE) may be used to simultaneously determine the first priority of the SPS PDSCH reception, and the first priority of the HARQ-ACK feedback corresponding to the SPS PDSCH reception, and/or the first priority of the HARQ-ACK feedback corresponding to the SPS release. In this case, the first priority may be used to determine the priority among at least two channels. The first priority of the first downlink channel may be: the priority of the PDSCH indicated by the *harq-CodebookID* field in the configuration information element IE for SPS; the first priority of the second uplink channel may be: the priority of the HARQ-ACK feedback corresponding to the PDSCH.

In an embodiment of the present disclosure, the existing priority indicator field may be completely used in duplex, and the existing priority indicator field may include: the *Priority indicator* field in UL grant DCI and the *Priority indicator* field in DL grant DCI, the *phy-PriorityIndex* field in RRC signaling configuring uplink transmission, and the *harq-CodebookID* field configuring downlink SPS transmission. Accordingly, the number of bits of the existing priority indicator fields may not be increased, meanings of some or all existing priority indicator fields may be re-interpreted, enabling the existing priority indicator fields that are used in duplex to simultaneously indicate priorities of UL channels/specific services and priorities of UL channels and DL channels. Specifically, following may be included.

The 1-bit *Priority indicator* field in UL grant DCI, such as DCI Format 0_1, DCI Format 0_2, may be used to indicate/determine a priority of scheduled PUSCH transmissions, or PUSCH transmissions with semi-persistent CSI report.

The 1-bit *Priority indicator* field in DL grant DCI, such as DCI Format 1_1, DCI Format 1_2, may be used to indicate/determine a priority of scheduled PDSCH transmissions, and a priority of triggered PUCCH transmission with corresponding HARQ-ACK information.

The *phy-PriorityIndex* field in the RRC ConfiguredGrantConfig IE may be used to indicate/determine a priority of configured grant PUSCH transmission.

The *phy-PriorityIndex* field in the RRC SchedulingRequestResourceConfig IE may be used to indicate/determine a priority of PUCCH transmission with SR for Listen-Before-Talk (LBT) failure recovery.

The *harq-CodebookID* field in the RRC SPS-Config IE may be used to indicate/determine a priority of SPS PDSCH reception, and a priority of PUCCH transmission with HARQ-ACK information corresponding to SPS PDSCH reception or SPS PDSCH release.

As shown in Table 1 below, for non-HARQ-ACK feedback, channels affected by the priority field in the present disclosure may be the same as those in the related art. For HARQ-ACK feedback, the priority fields in the present disclosure (such as the *Priority indicator* field in DL grant DCI and the *harq-CodebookID* field in the RRC SPS-Config IE) may further indicate the priority of the PDSCH channel corresponding to the HARQ-ACK feedback, in addition to indicating the priority of the PUCCH/PUSCH carrying the HARQ-ACK feedback.

**Table 1**

| type | Priority field | Affected channel (related art) | Affected channel (present disclosure) |
|---|---|---|---|
| Non-HARQ-ACK feedback | *Priority indicator* field in DCI Format 0_1/ 0_2 | scheduled PUSCH transmission | Same as the affected channel in the related art |
| | | PUSCH transmission with semi-persistent CSI report | |
| | *phy-PriorityIndex* field in ConfiguredGrantConfig IE | configured grant PUSCH transmission | |
| | *phy-PriorityIndex* field in *SchedulingRequestResourceConfig IE* | PUCCH transmission with SR for LBT failure recovery | |
| HARQ-ACK feedback | *Priority indicator* field in DCI Format 1_1/ 1_2 | triggered PUCCH transmission with corresponding HARQ-ACK information | Additional scheduled PDSCH |
| | *harq-CodebookID* field in *SPS-Config IE* | PUCCH transmission with HARQ-ACK information corresponding to a SPS PDSCH reception or a SPS PDSCH release | Additional SPS PDSCH |

In some embodiments, when the PDSCH channel overlaps with an uplink transmission in the time domain, the terminal may compare the priority of the PDSCH channel and the priority of the uplink transmission, and may determine whether to receive the downlink channel or transmit the uplink channel or treat an uplink and downlink conflict as an undefined behavior.

In some embodiments, when the first priority is used to determine the priority among at least two channels, the first priority of the first downlink channel and the first priority of the second uplink channel may meet at least one of the following.

The priority of the PDSCH reception scheduled by the downlink DCI format may be equal to the priority of the HARQ-ACK feedback corresponding to the PDSCH reception.

The priority of the higher-layer configured SPS PDSCH reception may be equal to the priority of the HARQ-ACK feedback corresponding to the SPS PDSCH reception.

The priority of the higher-layer configured SPS PDSCH reception may be less than or equal to the priority of the HARQ-ACK feedback corresponding to the SPS PDSCH release.

It should be noted that DL transmission may include: DL transmission (base station perspective) and DL reception (terminal perspective). UL transmission may include: UL transmission (terminal perspective) and UL reception (base station perspective). Therefore, transmission may be a superordinate concept of sending and receiving.

As shown in FIG. 3A, the number of bits of the priority field of the existing DCI scheduled PDSCH reception or SPS PDSCH reception may not be changed, but the meaning indicated by the priority field may be re-interpreted. Therefore, the priority field may simultaneously indicate the priority of the HARQ-ACK feedback (UL channel) and the priority of the PDSCH channel (DL channel) corresponding to the HARQ-ACK feedback. In particular, the priority of the DCI scheduled PDSCH reception or SPS PDSCH reception may be equal to the priority of the HARQ-ACK feedback corresponding to the PDSCH reception, and that is, the DCI scheduled PDSCH reception or SPS PDSCH reception and the uplink channel carrying the corresponding HARQ-ACK feedback may have the same priority n.

Based on the above method, first two combinations in Table 2 below may be supported, but last two combinations may not be supported. As noted, the last two combinations may be abnormal situations and may not need to be supported.

**Table 2**

| Priority of DCI-scheduled PDSCH reception or SPS PDSCH reception | Priority of corresponding HARQ-ACK feedback | supported/not supported | Notes |
|---|---|---|---|
| high | high | supported | |
| low | low | supported | |
| high | low | not supported | No need to be supported, otherwise, the PDSCH may be transmitted, but no HARQ-ACK feedback is provided. |
| low | high | not supported | No need to be supported, otherwise, the PDSCH may not be transmitted, but the HARQ-ACK may be fed back. |

Considering that the uplink channel carrying the HARQ-ACK feedback for the SPS PDSCH release may be more important than an ordinary SPS PDSCH reception, the priority of the uplink channel carrying the HARQ-ACK feedback for the SPS PDSCH release may be set higher, and that is, the first priority of the SPS PDSCH reception may be less than or equal to the first priority of the HARQ-ACK feedback corresponding to the SPS release.

In some embodiments, the first priority of the HARQ-ACK feedback for the SPS PDSCH release may be determined according to protocol agreement or may be determined based on higher layer configuration. For example, based on the protocol agreement or higher layer configuration, the priority of the HARQ-ACK feedback for the SPS PDSCH release may be determined to be a priority m, and determination of the priority m may be independent of the *harq-CodebookID* field in the RRC SPS-Config IE. The priority m may generally be a higher priority.

In some embodiments, the first priority of the HARQ-ACK feedback for the SPS PDSCH release may be determined according to the priority indication in the *harq-CodebookID* field and the protocol agreement or higher layer configuration. For example, the first priority = max{harq-CodebookID, m}, and the priority m may be determined by the protocol agreement or higher layer configuration.

In some embodiments, according to the priority indication in the *harq-CodebookID* field, table lookup may be performed to determine at least one of: the first priority of the SPS PDSCH reception, the first priority of the HARQ-ACK feedback corresponding to the SPS PDSCH reception, and the first priority of the HARQ-ACK feedback for the SPS PDSCH release. Table 3 provides an embodiment of a lookup table.

**Table 3**

| Indication of the *harq-CodebookID* field | Priority of the SPS PDSCH reception | Priority of the HARQ-ACK feedback corresponding to the SPS PDSCH reception | Priority of the HARQ-ACK feedback corresponding to the SPS PDSCH release |
|---|---|---|---|
| p1 (high priority) | p1 (high priority) | p1 (high priority) | p1 (high priority) |
| p0 (low priority) | p0 (low priority) | p0 (low priority) | p1 (high priority) |

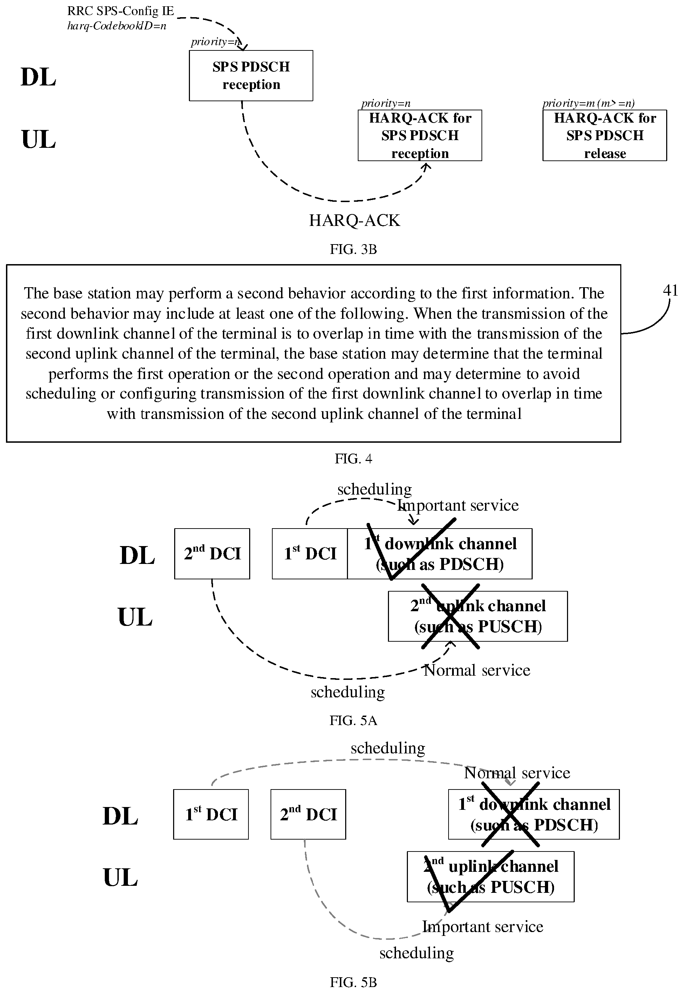

As shown in FIG. 3B, the priority of the uplink channel carrying the HARQ-ACK feedback for the SPS PDSCH release may be set to a priority m, and the priority of the SPS PDSCH reception and the corresponding HARQ-ACK feedback may be set to a priority n, and m ≥ n.

In some embodiments, when performing the first operation, such as determining that transmission of the first downlink channel overrides transmission of the second uplink channel, the transmission processing method in the present embodiment may further include the following.

The terminal may transmit, according to a next transmission occasion or a base station schedule, canceled data carried by the second uplink channel, so as to ensure the service to be normally transmitted.

For example, when the downlink transmission overrides the uplink transmission, the terminal may actively transmit the canceled uplink service in a subsequent CG PUSCH transmission occasion; or, the base station may know that the uplink transmission is canceled and may schedule, via UL grant DCI, the terminal to perform uplink transmission subsequently; and the terminal may transmit the canceled uplink service on an uplink resource scheduled by the base station.

In some embodiments, when performing the second operation, such as determining that transmission of the second uplink channel overrides transmission of the first downlink channel, the transmission processing method in the present embodiment may further include the following.

The terminal may receive, according to a base station schedule or a pre-configured transmission occasion, the canceled data carried by the first downlink channel.

For example, when the uplink transmission overrides the downlink transmission, the base station may transmit the canceled downlink data via a subsequent downlink DCI schedule or an SPS PDSCH transmission occasion; the terminal may receive the canceled downlink data based on the DCI scheduling indication from the base station or the pre-configured SPS PDSCH transmission occasion.

As shown in FIG. 4, FIG. 4 is a flow chart of the transmission processing method according to an embodiment of the present disclosure. The method may be applied to a base station. As shown in FIG. 4, the method may include the following blocks.

In a block 41, the base station may perform a second behavior according to the first information. The second behavior may include at least one of the following. When the transmission of the first downlink channel of the terminal is to overlap in time with the transmission of the second uplink channel of the terminal, the base station may determine that the terminal performs the first operation or the second operation and may determine to avoid scheduling or configuring transmission of the first downlink channel to overlap in time with transmission of the second uplink channel of the terminal.

In the embodiment of the present disclosure, the first information may include at least one of: the configuration of first priority of the first downlink channel and the second uplink channel, the grant or scheduling of the first downlink channel and the second uplink channel, the timing relationship between the first downlink channel based on grant or scheduling and the second uplink channel based on grant or scheduling.

The first operation may include any one of:
Determining that transmission of the first downlink channel overrides transmission of the second uplink channel; and
Receiving the first downlink channel, and/or, canceling transmitting or not transmitting the second uplink channel.

The second operation may include any one of:
Determining that the transmission of the second uplink channel overrides the transmission of the first downlink channel; and
Transmitting the second uplink channel, and/or, canceling receiving or not receiving the first downlink channel.

The transmission of the first downlink channel overriding the transmission of the second uplink channel may be described as: the first downlink channel overriding the second uplink channel; or may be described as: receiving the first downlink channel, and/or, canceling transmitting/not transmitting the second uplink channel. Canceling transmitting the second uplink channel may be referred to as: the second uplink channel shall not be transmitted.

The transmission of the second uplink channel overriding the transmission of the first downlink channel may be described as: the second uplink channel overriding the first downlink channel; or may be described as: canceling receiving/not receiving the first downlink channel, and/or, transmitting the second uplink channel. Canceling receiving the first downlink channel may be referred to as: the first downlink channel shall not be received.

According to the present disclosure, it may be clarified how to address the uplink and downlink transmission conflict at the terminal. For example, the inter-direction transmission conflict in the full-duplex network may be solved, and transmission reliability may be improved.

In some embodiments, the first priority may also be referred to as the cross-direction priority and may be at least used to determine the priority between different transmission directions. The cross-direction may be referred to as, but not limited to: cross-direction, inter-direction, cross-DL-UL, inter-DL-UL, and so on. The cross-direction priority may also be referred to as, but not limited to: cross-direction priority, inter-direction priority, cross-DL-UL priority, inter-DL-UL priority, and so on.

In some embodiments, the grant or scheduling of the first downlink channel and the second uplink channel may include but not limited to:
Dynamic Grant (DG), a channel scheduled by a DCI format, dynamically allocated downlink reception, dynamically allocated uplink transmission;
Configured Grant (CG), configured downlink assignment, configured uplink grant, Semi-Persistent Scheduling (SPS). The configured grant may also be referred to as "semi-static configuration".

In some embodiments, determining that the terminal performs the first operation or the second operation, may include at least one of the following.

When the first downlink channel is scheduled by the first DCI format and the second uplink channel is scheduled by the second DCI format, the base station may determine, according to the earlier or later relationship between the reception timing of the PDCCH providing the first DCI format and the reception timing of the PDCCH providing the second DCI format, that the terminal performs the first operation or the second operation.

When the first downlink channel is scheduled by the third DCI format and the second uplink channel is the configured grant, the base station may determine that the terminal performs the first operation.

When the first downlink channel is the configured grant and the second uplink channel is scheduled by the fourth DCI format, the base station may determine that the terminal performs the second operation.

In some embodiments, determining, according to the earlier or later relationship between the reception timing of the PDCCH providing the first DCI format and the reception timing of the PDCCH providing the second DCI format, that the terminal performs the first operation or the second operation, may include at least one of the following.

When the reception timing of the PDCCH providing the first DCI format is later than the reception timing of the PDCCH providing the second DCI format, the base station may determine that the terminal performs the first operation.

When the ending symbol of the PDCCH providing the first DCI format is later than the ending symbol of the PDCCH providing the second DCI format, and the ending symbol of the PDCCH providing the first DCI format is before the beginning symbol of the second uplink channel, and the time interval between the ending symbol of the PDCCH providing the first DCI format and the beginning symbol of the second uplink channel is greater than or equal to the first duration, the base station may determine that the terminal performs the first operation. The first duration may be defined by the protocol or configured in advance. For example, the first duration may be equal to M1 symbols, and the M1 may be a non-negative number.

When the reception timing of the PDCCH providing the second DCI format is later than the reception timing of the PDCCH providing the first DCI format, the base station may determine that the terminal performs the second operation.

When the ending symbol of the PDCCH providing the second DCI format is later than the ending symbol of the PDCCH providing the first DCI format, and the ending symbol of the PDCCH providing the second DCI format is before the beginning symbol of the first downlink channel, and the time interval between the ending symbol of the PDCCH providing the second DCI format and the beginning symbol of the first downlink channel is greater than or equal to the second duration, the base station may determine that the terminal performs the second operation. The second duration may be defined by the protocol or configured in advance. For example, the second duration may be equal to M2 symbols, and the M2 may be a non-negative number.

In some embodiments, performing the second behavior according to the first information, may further include any one of the following.

When both the transmission of the first downlink channel and the transmission of the second uplink channel are configured grants, the base station may avoid, through scheduling or configuration, overlapping the transmission of the first downlink channel and the transmission of the second uplink channel in the time domain.

When the transmission of the first downlink channel is to overlap in time with the transmission of the second uplink channel, and when both the transmission of the first downlink channel and the transmission of the second uplink channel are configured grants, the base station may determine that the terminal performs the first operation or the second operation.

When the transmission of the first downlink channel is scheduled by the fifth DCI format and the transmission of the second uplink channel is scheduled by the sixth DCI format, the base station may avoid, through scheduling or configuration, overlapping the transmission of the first downlink channel and the transmission of the second uplink channel in the time domain.

In some embodiments, for the above embodiment, the terminal may not be configured with the first priority; or, the terminal may be configured with the first priority, and the first priority of the first downlink channel may be the same as the first priority of the second uplink channel.

In some embodiments, determining that the terminal performs the first operation or the second operation, may include the following.

When the terminal is configured with the first priority, and the first priority of the first downlink channel may be different from the first priority of the second uplink channel, and the base station may perform any one of the following.

At least when the first priority of the first downlink channel is higher than the first priority of the second uplink channel, the base station may determine that the terminal performs the first operation.

At least when the first priority of the second uplink channel is higher than the first priority of the first downlink channel, the base station may determine that the terminal performs the second operation.

In some embodiments, the first priority may be used to determine the priority between the uplink channel and the downlink channel; or, the first priority may be used to determine the priority among at least two channels. The at least two channels may include at least one of: at least one uplink channel and at least one downlink channel; at least two uplink channels; at least two downlink channels. Specific description of the first priority may be referred to the above embodiments of the terminal, which will not be repeated here.

In some embodiments, the transmission processing method in the present embodiment may further include the following.

The base station may determine the transmission behavior of the terminal when the transmission of the first downlink channel overlaps in time with the transmission of the second uplink channel.

The base station may determine the first information according to the transmission behavior, such as determining the first priority indication/configuration, and/or the timing relationship indicated by the DCI, and so on.

The base station may configure or schedule the terminal according to the first information.

In this way, the terminal may follow the indication of the base station to perform data transmission and reception.

In some embodiments, the transmission behavior of the terminal may be determined according to service importance.

Determining the transmission behavior of the terminal when the transmission of the first downlink channel overlaps in time with the transmission of the second uplink channel, may include the following.

The base station may determine/decide, according to importance of services carried by the first downlink channel and the second uplink channel, the transmission behavior of the terminal when the transmission of the first downlink channel overlaps in time with the transmission of the second uplink channel. For example, the base station may determine that the transmission of the first downlink channel overrides the transmission of the second uplink channel, or determine that the transmission of the second uplink channel overrides the transmission of the first downlink channel.

In some embodiments, as shown in FIG. 5A, when a service carried by the first downlink channel (such as the PDSCH) scheduled by the first DCI is an important service, and a service carried by the second uplink channel (such as the PUSCH) scheduled by the second DCI is a normal service, and that is, the first downlink channel carries a more important service than the second uplink channel, the base station may determine that the transmission of the first downlink channel overrides the transmission of the second uplink channel. For the above purpose, the base station may perform any of the following.
(1) When the UE is provided with cross-direction priority configuration and a priority associated with the second uplink channel does not reach a highest priority, the base station may indicate, via DCI, that the first downlink channel is associated with a higher priority, such that the transmission of the first downlink channel may override the transmission of the second uplink channel.
(2) When the UE is not provided with the cross-direction priority configuration, the base station may first schedule the second uplink channel using the second DCI and then schedule the first downlink channel using the first DCI, that is, according to the specific timing relationship shown in FIG. 5A, the transmission of the first downlink channel may override the transmission of the second uplink channel.
(3) When the UE is provided with the cross-direction priority configuration, but the priority associated with the second uplink channel has already reached the highest priority, the base station may indicate, via DCI, that the first downlink channel is also associated with the highest priority, and according to the specific timing relationship shown in FIG. 5A, the transmission of the first downlink channel may override the transmission of the second uplink channel.

In other embodiments, as shown in FIG. 5B, when the service carried by the first downlink channel (such as the PDSCH) scheduled by the first DCI is the normal service, and the service carried by the second uplink channel (such as the PUSCH) scheduled by the second DCI is the important service, and that is, the second uplink channel carries a more important service than the first downlink channel, the base station may determine that the transmission of the second uplink channel overrides the transmission of the first downlink channel. For the above purpose, the base station may perform any of the following.
a) When the UE is provided with the cross-direction priority configuration and the priority associated with the first downlink channel does not reach the highest priority, the base station may indicate, via DCI, that the second uplink channel is associated with a higher priority.
b) When the UE is not provided with the cross-direction priority configuration, the base station may first schedule the first downlink channel using the first DCI and then schedule the second uplink channel using the second DCI, i.e., according to the specific timing relationship shown in FIG. 5B, the transmission of the second uplink channel may override the transmission of the first downlink channel.
c) When the UE is provided with the cross-direction priority configuration, but the priority associated with the first downlink channel has already reached the highest priority, the base station may indicate, via DCI, that the second uplink channel is associated with a higher priority, and according to the timing relationship shown in FIG. 5B, the transmission of the second uplink channel may override the transmission of the first downlink channel.

It should be noted that a subject of performing the transmission processing method according to the embodiments of the present disclosure may be a transmission processing apparatus, or a control module in the transmission processing apparatus for performing the transmission processing method. The embodiments of the present disclosure will be described based on an example where the transmission processing apparatus may perform the transmission processing method, so as to illustrate the transmission processing apparatus of the embodiments of the present disclosure.

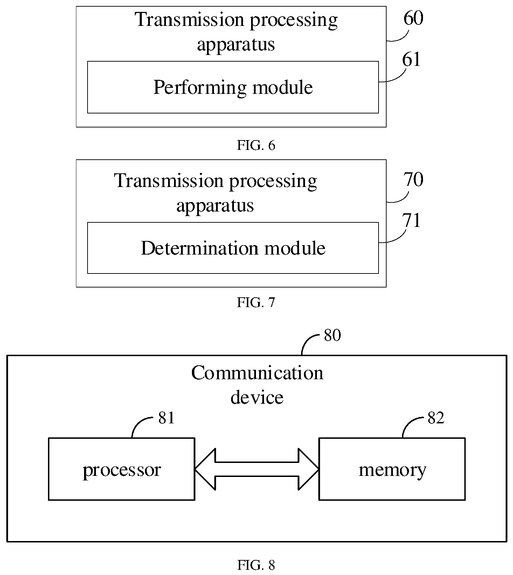

As shown in FIG. 6, FIG. 6 is a structural diagram of the transmission processing apparatus according to an embodiment of the present disclosure. The transmission processing apparatus may be applied to the terminal. As shown in FIG. 6, the transmission processing apparatus 60 may include the following.

A performing module 61 may be configured to perform the first behavior according to the first information. The first behavior may include at least one of: when the transmission of the first downlink channel is to overlap in time with the transmission of the second uplink channel, performing the first operation; when the transmission of the first downlink channel is to overlap in time with the transmission of the second uplink channel, performing the second operation; not expecting that the transmission of the first downlink channel overlaps in time with the transmission of the second uplink channel.

The first information may include at least one of: the configuration of the first priority of the first downlink channel and the first priority of the second uplink channel, the grant or scheduling of the first downlink channel and the second uplink channel, and the timing relationship between the first downlink channel based on grant or scheduling and the second uplink channel based on grant or scheduling.

The first operation may include any one of:
Determining that transmission of the first downlink channel overrides transmission of the second uplink channel; and
Receiving the first downlink channel, and/or, canceling transmitting or not transmitting the second uplink channel.

The second operation may include any one of:
Determining that the transmission of the second uplink channel overrides the transmission of the first downlink channel; and
Transmitting the second uplink channel, and/or, canceling receiving or not receiving the first downlink channel.

In some embodiments, the performing module 61 may be configured to perform any one of.
When the first downlink channel is scheduled by the first DCI format and the second uplink channel is scheduled by the second DCI format, the first operation or the second operation may be performed according to the earlier or later relationship between the reception timing of the PDCCH providing the first DCI format and the reception timing of the PDCCH providing the second DCI format.

When the first downlink channel is scheduled by the third DCI format and the second uplink channel is the configured grant, the first operation may be performed.

When the first downlink channel is the configured grant and the second uplink channel is scheduled by the fourth DCI format, the second operation may be performed.

In some embodiments, the performing module 61 may be configured to perform at least one of the following.

When the reception timing of the PDCCH providing the first DCI format is later than the reception timing of the PDCCH providing the second DCI format, the first operation may be performed.

When the ending symbol of the PDCCH providing the first DCI format is later than the ending symbol of the PDCCH providing the second DCI format, and the ending symbol of the PDCCH providing the first DCI format is before the beginning symbol of the second uplink channel, and the time interval between the ending symbol of the PDCCH providing the first DCI format and the beginning symbol of the second uplink channel may be greater than or equal to the first duration, the first operation may be performed.

When the reception timing of the PDCCH providing the second DCI format is later than the reception timing of the PDCCH providing the first DCI format, the second operation may be performed.

When the ending symbol of the PDCCH providing the second DCI format is later than the ending symbol of the PDCCH providing the first DCI format, and the ending symbol of the PDCCH providing the second DCI format is before the beginning symbol of the first downlink channel, and the time interval between the ending symbol of the PDCCH providing the second DCI format and the beginning symbol of the first downlink channel is greater than or equal to the second duration, the second operation may be performed.

In some embodiments, the performing module 61 may be configured to perform any one of the following.

The performing module 61 may not expect that the transmission of the first configured-grant downlink channel overlaps in time with the transmission of the second configured-grant uplink channel.

When the transmission of the first configured-grant downlink channel overlaps in time with the transmission of the second configured-grant uplink channel, the first operation or the second operation may be performed.

The performing module 61 may not expect that the transmission of the first downlink channel scheduled by the fifth DCI format overlaps in time with the transmission of the second uplink channel scheduled by the sixth DCI format.

In some embodiments, the terminal may not be configured with the first priority.

Alternatively, the terminal may be configured with the first priority, and the first priority of the first downlink channel may be the same as the first priority of the second uplink channel.

In some embodiments, the performing module 61 may be configured to perform any one of the following when the terminal is configured with the first priority and the first priority of the first downlink channel is different from the first priority of the second uplink channel.

At least when the first priority of the first downlink channel is higher than the first priority of the second uplink channel, the first operation may be performed.

At least when the first priority of the second uplink channel is higher than the first priority of the first downlink channel, the second operation may be performed.

In some embodiments, the first priority may be used to determine a priority between the uplink channel and the downlink channel.

The DCI format and/or RRC signaling received by the terminal may further include the second priority field, and the second priority field may be used to indicate the priority of the uplink channel.

In some embodiments, the first priority may be used to determine priorities of at least two channels.

The at least two channels may include at least one of:
At least one uplink channel and at least one downlink channel;
At least two uplink channels; and
At least two downlink channels.

In some embodiments, the performing module 61 may further be configured to perform at least one of the following.

The performing module 61 may determine, according to the priority indicator field in the seventh DCI format, the first priority of the PDSCH reception scheduled by the seventh DCI format and the first priority of the hybrid automatic repeat request acknowledgement (HARQ-ACK) feedback corresponding to the PDSCH reception.

The performing module 61 may determine, according to the priority indicator field in the SPS configuration information element, the first priority of the SPS PDSCH reception; and the first priority of the HARQ-ACK feedback corresponding to the SPS PDSCH reception, and/or the first priority of the HARQ-ACK feedback corresponding to the SPS release.

In some embodiments, when determining, according to the priority indicator field in the seventh DCI format, the first priority of the PDSCH reception scheduled by the seventh DCI format and the first priority of the HARQ-ACK feedback corresponding to the PDSCH reception, the first priority of the PDSCH reception may be equal to the first priority of the HARQ-ACK feedback corresponding to the PDSCH reception.

Furthermore or alternatively, when determining, according to the priority indicator field in the SPS configuration information element, the first priority of the SPS PDSCH reception, and the first priority of the HARQ-ACK feedback corresponding to the SPS PDSCH reception, and/or the first priority of the HARQ-ACK feedback corresponding to the SPS release, at least one of the following may be met: the first priority of the SPS PDSCH reception being equal to the first priority of the HARQ-ACK feedback corresponding to the SPS PDSCH reception; the first priority of the SPS PDSCH reception being less than or equal to the first priority of the HARQ-ACK feedback corresponding to the SPS release.

In some embodiments, the performing module 61 may further be configured to perform the following.

The performing module 61 may determine a transmission direction on a time unit according to received configuration or indication information.

The performing module 61 may determine, according to the transmission direction on the time unit, transmission situations of the first downlink channel and the second uplink channel and/or an overlapping situation of the first downlink channel and the second uplink channel in the time domain.

In some embodiments, the first priority of the first downlink channel may be: the priority of the PDSCH reception indicated by the priority indicator field in the downlink DCI format. The first priority of the second uplink channel may be: the priority of the HARQ-ACK feedback corresponding to the PDSCH reception.

Alternatively, the first priority of the first downlink channel may be: the priority of the PDSCH indicated by the harq-CodebookID field in the Semi-Persistent Scheduling (SPS) configuration information element. The first priority of the second uplink channel may be: the priority of the HARQ-ACK feedback corresponding to the PDSCH.

In some embodiments, the first priorities of the first downlink channel and the second uplink channel may meet at least one of the following.

The priority of the PDSCH reception scheduled by the downlink DCI format may be equal to the priority of the HARQ-ACK feedback corresponding to the PDSCH reception.

The priority of the higher-layer configured SPS PDSCH reception may be equal to the priority of the HARQ-ACK feedback corresponding to the SPS PDSCH reception.

The priority of the higher-layer configured SPS PDSCH reception may be less than or equal to the priority of the HARQ-ACK feedback corresponding to the SPS PDSCH release.

In some embodiments, the transmission processing apparatus 60 may further include the following.

A transceiver module may be configured to, when performing the first operation, transmit the canceled data carried by the second uplink channel according to the next transmission occasion or the base station schedule; and/or, when performing the second operation, receive the canceled data carried by the first downlink channel according to the base station schedule or the pre-configured transmission occasion.

The transmission processing apparatus 60 may implement various processes of the method embodiment shown in FIG. 1, same technical effects may be achieved. To avoid repetition, details may not be repeated here.

As shown in FIG. 7, FIG. 7 is a structural diagram of the transmission processing apparatus according to an embodiment of the present disclosure. The transmission processing apparatus may be applied to the base station. As shown in FIG. 7, the transmission processing apparatus 70 may include the following.

A determination module 71 may be configured to execute the second behavior according to the first information. The second behavior may include at least one of the following. When the transmission of the first downlink channel is to overlap in time with the transmission of the second uplink channel of the terminal, the determination module 71 may determine that the terminal performs the first operation or the second operation; and may determine to avoid scheduling or configuring the transmission of the first downlink channel to overlap in time with the transmission of the second uplink channel of the terminal.

The first information may include at least one of: the configuration of first priorities of the first downlink channel and the second uplink channel, the grant or scheduling of the first downlink channel and the second uplink channel, the timing relationship between the first downlink channel based on grant or scheduling and the second uplink channel based on grant or scheduling.

The first operation may include any one of:
Determining that the transmission of the first downlink channel overrides the transmission of the second uplink channel; and
Receiving the first downlink channel, and/or, canceling transmitting or not transmitting the second uplink channel.

The second operation may include any one of:
Determining that the transmission of the second uplink channel overrides the transmission of the first downlink channel; and
Transmitting the second uplink channel, and/or, canceling receiving or not receiving the first downlink channel.

In some embodiments, the determination module 71 may be configured to perform at least one of the following.

When the first downlink channel is scheduled by the first DCI format and the second uplink channel is scheduled by the second DCI format, the determination module 71 may determine, according to the earlier or later relationship between the reception timing of the PDCCH providing the first DCI format and the reception timing of the PDCCH providing the second DCI format, that the terminal performs the first operation or the second operation.

When the first downlink channel is scheduled by the third DCI format and the second uplink channel is the configured grant, the determination module 71 may determine that the terminal performs the first operation.

When the first downlink channel is the configured grant and the second uplink channel is scheduled by the fourth DCI format, the determination module 71 may determine that the terminal performs the second operation.

In some embodiments, the determination module 71 may be configured to perform at least one of the following.

When the reception timing of the PDCCH providing the first DCI format is later than the reception timing of the PDCCH providing the second DCI format, the determination module 71 may determine that the terminal performs the first operation.

When the ending symbol of the PDCCH providing the first DCI format is later than the ending symbol of the PDCCH providing the second DCI format, and the ending symbol of the PDCCH providing the first DCI format is before the beginning symbol of the second uplink channel, and the time interval between the ending symbol of the PDCCH providing the first DCI format and the beginning symbol of the second uplink channel is greater than or equal to the first duration, the determination module 71 may determine that the terminal performs the first operation.

When the reception timing of the PDCCH providing the second DCI format is later than the reception timing of the PDCCH providing the first DCI format, the determination module 71 may determine that the terminal performs the second operation.

When the ending symbol of the PDCCH providing the second DCI format is later than the ending symbol of the PDCCH providing the first DCI format, and the ending symbol of the PDCCH providing the second DCI format is before the beginning symbol of the first downlink channel, and the time interval between the ending symbol of the PDCCH providing the second DCI format and the beginning symbol of the first downlink channel is greater than or equal to the second duration, the determination module 71 may determine that the terminal performs the second operation.

In some embodiments, the determination module 71 may further be configured to perform any one of the following.

The determination module 71 may avoid, through scheduling or configuration, overlapping the transmission of the first configured-grant downlink channel with the transmission of the second configured-grant uplink channel in the time domain.

When the transmission of the first configured-grant downlink channel overlaps in time with the transmission of the second configured-grant uplink channel, the determination module 71 may determine that the terminal performs the first operation or the second operation.

The determination module 71 may avoid, through scheduling or configuration, overlapping the transmission of the first downlink channel scheduled by the fifth DCI format with the transmission of the second uplink channel scheduled by the sixth DCI format in the time domain.

In some embodiments, the terminal may not be configured with the first priority.

Alternatively, the terminal may be configured with the first priority, and the first priority of the first downlink channel may be the same as the first priority of the second uplink channel.

In some embodiments, the determination module 71 may further be configured to perform any one of the following, when the terminal is configured with the first priority and the first priority of the first downlink channel is different from the first priority of the second uplink channel.

At least when the first priority of the first downlink channel is higher than the first priority of the second uplink channel, the determination module 71 may determine that the terminal performs the first operation.

At least when the first priority of the second uplink channel is higher than the first priority of the first downlink channel, the determination module 71 may determine that the terminal performs the second operation.

In some embodiments, the determination module 71 may further be configured to: determine the transmission behavior of the terminal when the transmission of the first downlink channel overlaps in time with the transmission of the second uplink channel; and determine the first information according to the transmission behavior.

The transmission processing apparatus 70 may further include the following.

A configuration or scheduling module may be configured to configure or schedule the terminal according to the first information.

In some embodiments, the determination module 71 may further be configured to: determine the transmission behavior of the terminal when the transmission of the first downlink channel overlaps in time with the transmission of the second uplink channel according to importance of services carried by the first downlink channel and the second uplink channel.

In some embodiments, the first priority may be used to determine the priority between the uplink channel and the downlink channel.

Alternatively, the first priority may be used to determine priorities among at least two channels. The at least two channels may include at least one of: at least one uplink channel and at least one downlink channel; at least two uplink channels; at least two downlink channels.

The transmission processing apparatus 70 may implement various processes of the method embodiment shown in FIG. 4, and same technical effects may be achieved. In order to avoid repetition, details may not be repeated here.

In some embodiments, as shown in FIG. 8, an embodiment of the present disclosure may further provide a communication device 80, including a processor 81, a memory 82, and programs or instructions stored in the memory 82 and executable on the processor 81. For example, when the communication device 80 is the terminal, the programs or instructions, when executed by the processor 81, may implement the various processes of the above transmission processing method, and the same technical effects may be achieved. When the communication device 80 is the base station, the programs or instructions, when executed by the processor 81, may implement the various processes of the above transmission processing method, and the same technical effects may be achieved. In order to avoid repetition, details may not be repeated here.

An embodiment of the present disclosure may further provide a computer-readable storage medium, having programs or instructions stored thereon. The programs or instructions, when executed by a processor, may implement the various processes of the above transmission processing method, and the same technical effects may be achieved. In order to avoid repetition, details are not repeated here.

The computer-readable storage medium may include a permanent medium, a non-permanent medium, a removable medium and a non-removable medium. Information storage may be implemented by any method or technology. Information may be computer-readable instructions, data structures, modules of a program, or any other data. Examples of the computer-readable storage medium may include, but not limited to: a phase-change memory (PRAM), a static random access memory (SRAM), a dynamic random access memory (DRAM), any other type of random access memory (RAM), a read-only memory (ROM), an electrically erasable programmable read-only memory (EEPROM), a flash memory or any other memory technologies, a compact disc read-only memory (CD-ROM), a digital video disc (DVD) or any other optical storage, a magnetic cassette, a magnetic tape, a magnetic disk storage or any other magnetic storage device, or any other non-transmission medium, which may be used to store information that can be accessed by a computing device. As defined herein, the computer-readable storage medium may not include transitory media, such as modulated data signals and carrier waves.

It should be noted that, in the present disclosure, terms "include", "comprise", or any other variation thereof are intended to cover non-exclusive inclusion, such that a process, a method, an article, or a device that includes a list of elements includes not only the listed elements but also other elements that are not expressly listed, or may include elements that are inherently included in the process, the method, the article, or the device. Without further limitation, an element defined by a phrase "comprising a ..." does not preclude presence of additional identical elements in the process, the method, the article, or the device that includes the element.

Serial numbers of the above embodiments of the present disclosure may only be used for description and do not represent superiority or inferiority of the embodiments.

According to the description of the above embodiments, any ordinary skilled artisan in the art may clearly understand that the methods of the above embodiments may be implemented by means of software and a necessary universal hardware platform, and may also be implemented by hardware. In many cases, the former may be a preferred implementation. Based on such understanding, the technical solution of the present disclosure, or a part thereof that contributes to the related art, may be embodied in the form of a software product. The computer software product may be stored in a storage medium (such as the ROM/RAM, the magnetic disk, the optical disk), and may include various instructions to enable a service classification device (which may be a mobile phone, a computer, a server, an air conditioner, or a network device, and so on) to perform the methods of the various embodiments of the present disclosure.

The above description provides only some embodiments of the present disclosure. It should be noted that, any ordinary skilled artisan in the art may perform various improvements and modifications without departing from the principle of the present disclosure, and the improvements and modifications shall also be considered within the scope of the present disclosure.

## Claims

1. A transmission processing method, comprising:
performing, by a terminal, a first behavior according to first information; wherein the first behavior comprises at least one of: when transmission of a first downlink channel is to overlap in time with transmission of a second uplink channel , performing a first operation; when transmission of the first downlink channel is to overlap in time with transmission of the second uplink channel, performing a second operation; not expecting that transmission of the first downlink channel overlaps in time with transmission of the second uplink channel;
wherein the first information comprises at least one of: a configuration of first priority of the first downlink channel and the second uplink channel, grant or scheduling of the first downlink channel and the second uplink channel, a timing relationship between the first downlink channel based on grant or scheduling and the second uplink channel based on grant or scheduling;
the first operation comprises any one of:
determining that transmission of the first downlink channel overrides transmission of the second uplink channel;
receiving the first downlink channel, and/or, canceling transmitting or not transmitting the second uplink channel;
the second operation comprises any one of:
determining that transmission of the second uplink channel overrides transmission of the first downlink channel;
transmitting the second uplink channel, and/or, canceling receiving or not receiving the first downlink channel.

2. The transmission processing method according to claim 1, wherein, the performing, by the terminal, the first behavior according to the first information comprises any one of:
when transmission of the first downlink channel is to overlap in time with transmission of the second uplink channel, and when the first downlink channel is scheduled by a first downlink control information (DCI) format and the second uplink channel is scheduled by a second DCI format, the terminal performing the first operation or the second operation according to an earlier or later relationship between a reception timing of a physical downlink control channel (PDCCH) providing the first DCI format and a reception timing of a PDCCH providing the second DCI format;
when transmission of the first downlink channel is to overlap in time with transmission of the second uplink channel, and when the first downlink channel is scheduled by a third DCI format and the second uplink channel is a configured grant, the terminal performing the first operation;
when transmission of the first downlink channel is to overlap in time with transmission of the second uplink channel, and when the first downlink channel is a configured grant and the second uplink channel is scheduled by a fourth DCI format, the terminal performing the second operation.

3. The transmission processing method according to claim 2, wherein the terminal performing the first operation or the second operation according to the earlier or later relationship between the reception timing of the physical downlink control channel (PDCCH) providing the first DCI format and the reception timing of the PDCCH providing the second DCI format, comprises at least one of:
the terminal performing the first operation when the reception timing of the PDCCH providing the first DCI format is later than the reception timing of the PDCCH providing the second DCI format;
the terminal performing the first operation when an ending symbol of the PDCCH providing the first DCI format is later than an ending symbol of the PDCCH providing the second DCI format, and the ending symbol of the PDCCH providing the first DCI format is before a beginning symbol of the second uplink channel, and a time interval between the ending symbol of the PDCCH providing the first DCI format and the beginning symbol of the second uplink channel is greater than or equal to a first duration;
the terminal performing the second operation when the reception timing of the PDCCH providing the second DCI format is later than the reception timing of the PDCCH providing the first DCI format;
the terminal performing the second operation when an ending symbol of the PDCCH providing the second DCI format is later than an ending symbol of the PDCCH providing the first DCI format, and the ending symbol of the PDCCH providing the second DCI format is before a beginning symbol of the first downlink channel, and a time interval between the ending symbol of the PDCCH providing the second DCI format and the beginning symbol of the first downlink channel is greater than or equal to a second duration.

4. The transmission processing method according to claim 1, wherein the performing, by the terminal, the first behavior according to first information, comprises any one of:
the terminal not expecting that transmission of the first downlink channel overlap in time with transmission of the second uplink channel when both transmission of the first downlink channel and transmission of the second uplink channel are configured grants;
the terminal performing the first operation or the second operation when transmission of the first downlink channel is to overlap in time with transmission of the second uplink channel, and when both transmission of the first downlink channel and transmission of the second uplink channel are configured grants;
the terminal not expecting that transmission of the first downlink channel overlap in time with transmission of the second uplink channel when transmission of the first downlink channel is scheduled by a fifth DCI format and transmission of the second uplink channel is scheduled by a sixth DCI format.

5. The transmission processing method according to any one of claims 2 to 4, wherein:
the terminal is not configured with a first priority; or
the terminal is configured with a first priority, and the first priority of the first downlink channel is the same as the first priority of the second uplink channel.

6. The transmission processing method according to claim 1, wherein, the performing, by the terminal, the first behavior according to first information, comprises:
when the terminal is configured with a first priority, and the first priority of the first downlink channel is different from the first priority of the second uplink channel, the terminal performing any one of:
performing the first operation at least when the first priority of the first downlink channel is higher than the first priority of the second uplink channel;
performing the second operation at least when the first priority of the second uplink channel is higher than the first priority of the first downlink channel.

7. The transmission processing method according to claim 1, wherein:
the first priority is configured to determine a priority between an uplink channel and a downlink channel; and
a DCI format and/or radio resource control (RRC) signaling received by the terminal comprises a second priority field, and the second priority field is configured to indicate a priority of the uplink channel.

8. The transmission processing method according to claim 1, wherein the first priority is configured to indicate priorities among at least two channels; and the at least two channels comprise at least one of the following:
at least one uplink channel and at least one downlink channel;
at least two uplink channels;
at least two downlink channels.

9. The transmission processing method according to claim 1, further comprising at least one of:
determining, by the terminal according to a priority indicator field in a seventh DCI format, a first priority of a physical downlink shared channel (PDSCH) reception scheduled by the seventh DCI format and a first priority of a hybrid automatic repeat request acknowledgement (HARQ-ACK) feedback corresponding to the PDSCH reception;
determining, by the terminal according to a priority indicator field in a configuration information element for semi-persistent scheduling (SPS), a first priority of an SPS PDSCH reception; and a first priority of a HARQ-ACK feedback corresponding to the SPS PDSCH reception, and/or a first priority of a HARQ-ACK feedback corresponding to an SPS release.

10. The transmission processing method according to claim 9, wherein:
when determining, according to the priority indicator field in the seventh DCI format, the first priority of the PDSCH reception scheduled by the seventh DCI format and the first priority of the HARQ-ACK feedback corresponding to the PDSCH reception, the first priority of the PDSCH reception is equal to the first priority of the HARQ-ACK feedback corresponding to the PDSCH reception;
and/or
when determining, according to the priority indicator field in the semi-persistent scheduling (SPS) configuration information element, the first priority of the SPS PDSCH reception, and the first priority of the HARQ-ACK feedback corresponding to the SPS PDSCH reception, and/or the first priority of the HARQ-ACK feedback corresponding to the SPS release, at least one of the following is met: the first priority of the SPS PDSCH reception is equal to the first priority of the HARQ-ACK feedback corresponding to the SPS PDSCH reception; the first priority of the SPS PDSCH reception is less than or equal to the first priority of the HARQ-ACK feedback corresponding to the SPS release.

11. The transmission processing method according to claim 1, further comprising:
determining, by the terminal, a transmission direction on a time unit according to received configuration or indication information;
determining, by the terminal according to the transmission direction on the time unit, transmission situations of the first downlink channel and the second uplink channel and/or an overlapping situation of the first downlink channel and the second uplink channel in the time domain.

12. The transmission processing method according to claim 1, wherein:
when performing the first operation, the method further comprises: transmitting, by the terminal, canceled data carried by the second uplink channel according to a next transmission occasion or base station scheduling;
and/or
when performing the second operation, the method further comprises: receiving canceled data carried by first downlink channel, by the terminal, according to scheduling or a pre-configured transmission occasion.

13. A transmission processing method, comprising:
performing, by a base station, a second behavior according to first information; wherein the second behavior comprises at least one of: when transmission of a first downlink channel is to overlap in time with transmission of a second uplink channel of a terminal, determining that the terminal performs a first operation or a second operation; determining to avoid scheduling or configuring the transmission of the first downlink channel to overlap in time with the transmission of the second uplink channel of the terminal;
wherein the first information comprises at least one of: a configuration of first priority of the first downlink channel and the second uplink channel, grant or scheduling of the first downlink channel and the second uplink channel, a timing relationship between the first downlink channel based on grant or scheduling and the second uplink channel based on grant or scheduling;
the first operation comprises any one of:
determining that transmission of the first downlink channel overrides transmission of the second uplink channel;
receiving the first downlink channel, and/or, canceling transmitting or not transmitting the second uplink channel;
the second operation comprises any one of:
determining that transmission of the second uplink channel overrides transmission of the first downlink channel;
transmitting the second uplink channel, and/or, canceling receiving or not receiving the first downlink channel.

14. The transmission processing method according to claim 13, wherein the determining that the terminal performs the first operation or the second operation, comprises at least one of:
when the first downlink channel is scheduled by a first DCI format and the second uplink channel is scheduled by a second DCI format, the base station determining, according to an earlier or later relationship between a reception timing of a PDCCH providing the first DCI format and a reception timing of a PDCCH providing the second DCI format, that the terminal performs the first operation or the second operation;
when the first downlink channel is scheduled by a third DCI format and the second uplink channel is a configured grant, the base station determining that the terminal performs the first operation;
when the first downlink channel is a configured grant and the second uplink channel is scheduled by a fourth DCI format, the base station determining that the terminal performs the second operation.

15. The transmission processing method according to claim 14, wherein the base station determining, according to the earlier or later relationship between the reception timing of the PDCCH providing the first DCI format and the reception timing of the PDCCH providing the second DCI format, that the terminal performs the first operation or the second operation, comprises at least one of:
the base station determining that the terminal performs the first operation, when the reception timing of the PDCCH providing the first DCI format is later than the reception timing of the PDCCH providing the second DCI format;
the base station determining that the terminal performs the first operation, when an ending symbol of the PDCCH providing the first DCI format is later than an ending symbol of the PDCCH providing the second DCI format, and the ending symbol of the PDCCH providing the first DCI format is before a beginning symbol of the second uplink channel, and a time interval between the ending symbol of the PDCCH providing the first DCI format and the beginning symbol of the second uplink channel is greater than or equal to a first duration;
the base station determining that the terminal performs the second operation, when the reception timing of the PDCCH providing the second DCI format is later than the reception timing of the PDCCH providing the first DCI format;
the base station determining that the terminal performs the second operation, when an ending symbol of the PDCCH providing the second DCI format is later than an ending symbol of the PDCCH providing the first DCI format, and the ending symbol of the PDCCH providing the second DCI format is before a beginning symbol of the first downlink channel, and a time interval between the ending symbol of the PDCCH providing the second DCI format and the beginning symbol of the first downlink channel is greater than or equal to a second duration.

16. The transmission processing method according to claim 13, wherein the performing, by the base station, the second behavior according to first information, comprises any one of:
the base station avoiding, through scheduling or configuration, the transmission of the first downlink channel from being overlapping in time with the transmission of the second uplink channel, when transmission of the first downlink channel and transmission of the second uplink channel are both configured grants;
the base station determining that the terminal performs the first operation or the second operation, when transmission of the first downlink channel is to overlap in time with transmission of the second uplink channel, and when transmission of the first downlink channel and transmission of the second uplink channel are both configured grants;
the base station avoiding, through scheduling or configuration, the transmission of the first downlink channel from being overlapping in time with the transmission of the second uplink channel, when transmission of the first downlink channel is scheduled by a fifth DCI format and transmission of the second uplink channel is scheduled by a sixth DCI format.

17. The transmission processing method according to any one of claims 13 to 16, wherein:
the terminal is not configured with a first priority; or
the terminal is configured with a first priority, and the first priority of the first downlink channel is the same as the first priority of the second uplink channel are the same.

18. The transmission processing method according to claim 13, wherein the determining that the terminal performs the first operation or the second operation, comprises:
when the terminal is configured with a first priority, and the first priority of the first downlink channel is different from the first priority of the second uplink channel are different, the base station performing any one of:
determining that the terminal performs the first operation at least when the first priority of the first downlink channel is higher than the first priority of the second uplink channel;
determining that the terminal performs the second operation at least when the first priority of the second uplink channel is higher than the first priority of the first downlink channel.

19. The transmission processing method according to claim 13, further comprising:
determining, by the base station, a transmission behavior of the terminal when transmission of the first downlink channel is to overlap in time with transmission of the second uplink channel;
determining, by the base station, the first information according to the transmission behavior;
configuring or scheduling, by the base station, the terminal according to the first information.

20. The transmission processing method according to claim 19, wherein the determining, by the base station, the transmission behavior of the terminal when transmission of the first downlink channel overlaps in time with transmission of the second uplink channel, comprises:
determining, by the base station according to importance of services carried on the first downlink channel and the second uplink channel, the transmission behavior of the terminal when transmission of the first downlink channel overlaps in time with transmission of the second uplink channel.

21. The transmission processing method according to claim 13, wherein:
the first priority is configured to determine a priority between an uplink channel and a downlink channel; or
the first priority is configured to indicate priorities among at least two channels; and the at least two channels comprise at least one of: at least one uplink channel and at least one downlink channel; at least two uplink channels; at least two downlink channels.

22. A transmission processing apparatus, comprising:
a performing module, configured to perform a first behavior according to first information; wherein the first behavior comprises at least one of: when transmission of a first downlink channel is to overlap in time with transmission of a second uplink channel, performing a first operation; and when transmission of the first downlink channel is to overlap in time with transmission of the second uplink channel, performing a second operation; not expecting that transmission of the first downlink channel overlap in time with transmission of the second uplink channel;
wherein the first information comprises at least one of: a configuration of first priority of the first downlink channel and the second uplink channel, grant or scheduling of the first downlink channel and the second uplink channel, a timing relationship between the first downlink channel based on grant or scheduling and the second uplink channel based on grant or scheduling;
the first operation comprises any one of:
determining that transmission of the first downlink channel overrides transmission of the second uplink channel;
receiving the first downlink channel, and/or, canceling transmitting or not transmitting the second uplink channel;
the second operation comprises any one of:
determining that transmission of the second uplink channel overrides transmission of the first downlink channel;
transmitting the second uplink channel, and/or, canceling receiving or not receiving the first downlink channel.

23. A transmission processing apparatus, comprising:
a determination module, configured to execute a second behavior according to first information; wherein the second behavior comprises at least one of: when transmission of a first downlink channel of a terminal is to overlap in time with transmission of a second uplink channel, determining that the terminal performs a first operation or a second operation; determining to avoid scheduling or configuring transmission of the first downlink channel to overlap in time with transmission of the second uplink channel of the terminal;
wherein the first information comprises at least one of: a configuration of first priority of the first downlink channel and the second uplink channel, grant or scheduling of the first downlink channel and the second uplink channel, a timing relationship between the first downlink channel based on grant or scheduling and the second uplink channel based on grant or scheduling;
the first operation comprises any one of:
determining that transmission of the first downlink channel overrides transmission of the second uplink channel;
receiving the first downlink channel, and/or, canceling transmitting or not transmitting the second uplink channel;
the second operation comprises any one of:
determining that transmission of the second uplink channel overrides transmission of the first downlink channel;
transmitting the second uplink channel, and/or, canceling receiving or not receiving the first downlink channel.

24. A communication device, comprising a processor, a memory, and programs or instructions stored in the memory and executable on the processor, wherein the programs or instructions, when executed by the processor, are configured to implement the transmission processing method according to any one of claims 1 to 12 or to implement the transmission processing method according to any one of claims 13 to 21.

25. A readable storage medium, having programs or instructions stored thereon, wherein the programs or instructions, when executed by a processor, are configured to implement the transmission processing method according to any one of claims 1 to 12 or to implement the transmission processing method according to any one of claims 13 to 21.
